(19) Europäisches Patentamt / European Patent Office / Office européen des brevets

(11) **EP 4 410 021 B1**

(12) **EUROPEAN PATENT SPECIFICATION**

(45) Date of publication and mention
of the grant of the patent:
**24.12.2025 Bulletin 2025/52**

(21) Application number: **23866672.1**

(22) Date of filing: **30.06.2023**

(51) International Patent Classification (IPC):
**H04W 72/04** $^{(2023.01)}$    **H04L 5/00** $^{(2006.01)}$

(52) Cooperative Patent Classification (CPC):
**H04L 5/0051; H04L 5/0012**

(86) International application number:
**PCT/CN2023/104952**

(87) International publication number:
**WO 2024/113861 (06.06.2024 Gazette 2024/23)**

(54) **COMB OFFSET HOPPING AND CYCLIC SHIFT HOPPING OF SOUNDING REFERENCE SIGNALS**

KAMM-OFFSET-SPRUNG UND ZYKLISCHER VERSCHIEBUNGSSPRUNG VON
TONREFERENZSIGNALEN

SAUT DE DÉCALAGE DE PEIGNE ET SAUT DE CHANGEMENT CYCLIQUE DE SIGNAUX DE
RÉFÉRENCE DE SONDAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**07.08.2024 Bulletin 2024/32**

(73) Proprietor: **ZTE Corporation**
**Shenzhen, Guangdong 518057 (CN)**

(72) Inventors:
• **JIANG, Guangyu**
**Shenzhen, Guangdong 518057 (CN)**
• **YAO, Ke**
**Shenzhen, Guangdong 518057 (CN)**
• **GAO, Bo**
**Shenzhen, Guangdong 518057 (CN)**
• **ZHANG, Shujuan**
**Shenzhen, Guangdong 518057 (CN)**

(74) Representative: **Vossius & Partner**
**Patentanwälte Rechtsanwälte mbB**
**Siebertstraße 3**
**81675 München (DE)**

(56) References cited:
WO-A1-2021/168803    WO-A1-2023/031796
WO-A1-2023/091417    US-A1- 2019 174 525
US-A1- 2023 030 823    US-A1- 2023 188 398

• **MIN ZHU ET AL: "On SRS enhancement for CJT
and 8Tx operation", vol. RAN WG1, no. Incheon,
KR; 20230522 - 20230526, 15 May 2023
(2023-05-15), XP052310165, Retrieved from the
Internet <URL:https://www.3gpp.org/ftp/
TSG_RAN/WG1_RL1/TSGR1_113/Docs/
R1-2304709.zip R1-2304709.docx> [retrieved on
20230515]**

**Description**

TECHNICAL FIELD

The disclosure relates generally to wireless communications and, more particularly, to comb offset hopping and cyclic shift hopping of Sounding Reference Signals (SRS).

BACKGROUND

In Time-Division-Duplexing (TDD) Coherent Joint Transmission (CJT), comb offset hopping and cyclic shift hopping can randomize the interference among SRS transmitted from different User Equipment (UEs) served by different Transmission and Receiving Points (TRPs).

3GPP Draft R1-2304709 by Min Zhu et al. relates to "On SRS enhancement for CJT and 8Tx operation".

SUMMARY

The invention is specified by the independent claims. Preferred embodiments are defined in the dependent claims. In the following description, although numerous features may be designated as optional, it is nevertheless acknowledged that all features comprised in the independent claims are not to be read as optional.

In some arrangements, a wireless communication device (e.g., a UE) receives from a network device, at least one of a first parameter indicating a subset of comb offsets or a second parameter indicating a subset of cyclic shifts. The UE determines based on a transmission time instant and the at least one of the first parameter or the second parameter, at least one of a comb offset or a cyclic shift for each Sounding Reference Signal (SRS) port associated with an SRS resource. The UE transmits to the network device, an SSRS according to the at least one of the comb offset or the cyclic shift.

In some arrangements, a network device sends to a UE, at least one of a first parameter indicating a subset of comb offsets or a second parameter indicating a subset of cyclic shifts. The UE determines based on a transmission time instant and the at least one of the first parameter or the second parameter, at least one of a comb offset or a cyclic shift for each SRS port associated with an SRS resource. The network device receives from the UE an SRS according to the at least one of the comb offset or the cyclic shift.

The above and other aspects and their implementations are described in greater detail in the drawings, the descriptions, and the claims.

BRIEF DESCRIPTION OF THE DRAWINGS

Various example arrangements of the present solution are described in detail below with reference to the following figures or drawings. The drawings are provided for purposes of illustration only and merely depict example arrangements of the present solution to facilitate the reader's understanding of the present solution. Therefore, the drawings should not be considered limiting of the breadth, scope, or applicability of the present solution. It should be noted that for clarity and ease of illustration, these drawings are not necessarily drawn to scale.

FIG. 1 is a schematic block diagram illustrating an example wireless communication system, according to various arrangements.

FIG. 2 illustrates a block diagram of an example Base Station (BS) and an example User Equipment (UE), in accordance with some arrangements.

FIG. 3 s a flowchart diagram illustrating an example method for determining a comb offset and a cyclic shift hopping for an SRS port of an SRS resource, according to various arrangements.

FIG. 4 is a diagram illustrating a configuration of comb offset hopping, according to various arrangements.

FIG. 5 is a diagram illustrating an implementation of comb offset hopping, according to various arrangements.

FIG. 6 is a diagram illustrating a configuration of comb offset hopping, according to various arrangements.

FIG. 7 is a diagram illustrating an implementation of comb offset hopping, according to various arrangements.

FIG. 8 is a diagram illustrating a configuration of comb offset hopping, according to various arrangements.

FIG. 9 is a diagram illustrating an implementation of comb offset hopping, according to various arrangements.

FIG. 10 is a diagram illustrating a configuration of comb offset hopping, according to various arrangements.

FIG. 11 is a diagram illustrating an implementation of comb offset hopping, according to various arrangements.

FIG. 12 is a diagram illustrating a configuration of cyclic shift hopping, according to various arrangements.

FIG. 13 is a diagram illustrating an implementation of cyclic shift hopping, according to various arrangements.

FIG. 14 is a diagram illustrating a configuration of cyclic shift hopping, according to various arrangements.

FIG. 15 is a diagram illustrating an implementation of cyclic shift hopping, according to various arrangements.

FIG. 16 is a diagram illustrating a configuration of cyclic shift hopping, according to various arrangements.

FIG. 17 is a diagram illustrating an implementation of cyclic shift hopping, according to various arrangements.

FIG. 18 is a diagram illustrating a configuration of cyclic shift hopping, according to various arrangements.

FIG. 19 is a diagram illustrating an implementation of cyclic shift hopping, according to various arrangements.

## DETAILED DESCRIPTION

Various example arrangements of the present solution are described below with reference to the accompanying figures to enable a person of ordinary skill in the art to make and use the present solution. As would be apparent to those of ordinary skill in the art, after reading the present disclosure, various changes or modifications to the examples described herein can be made without departing from the scope of the present solution. Thus, the present solution is not limited to the example arrangements and applications described and illustrated herein. Additionally, the specific order or hierarchy of steps in the methods disclosed herein are merely example approaches. Based upon design preferences, the specific order or hierarchy of steps of the disclosed methods or processes can be re-arranged while remaining within the scope of the present solution. Thus, those of ordinary skill in the art will understand that the methods and techniques disclosed herein present various steps or acts in a sample order, and the present solution is not limited to the specific order or hierarchy presented unless expressly stated otherwise.

Some legacy UEs that do not support comb offset or cyclic shift hopping and new UEs that support comb offset and cyclic shift hopping may coexist within a cell, and legacy and new UEs occupy two respective non-overlapping comb offset/cyclic shift subsets to maintain the orthogonality among legacy and new Sounding Reference Signal (SRS) ports. In other words, the comb offset/cyclic shift hopping can be limited within a comb offset/cyclic shift subset. The arrangements disclosed herein relate to systems, methods, non-transitory computer-readable media, and apparatuses for configuring the comb offset/cyclic shift subset and implementing comb offset/cyclic shift hopping when the subset is configured.

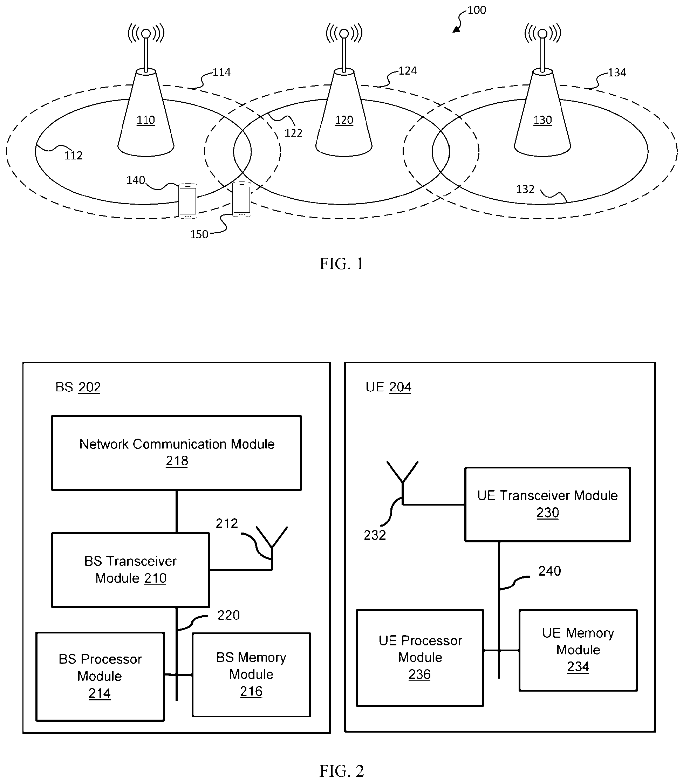

FIG. 1 shows an example wireless communication system 100 supporting CJT, according to various arrangements. In the wireless communication system 100, a network-side communication node, a network device, or a Base Station (BS) can include one or more of a next Generation Node B (gNB), an E-Utran Node B (also known as Evolved Node B, eNodeB, or eNB), a pico station, a femto station, a Transmission/Reception Point (TRP), an Access Point (AP), a node, or the like. A terminal-side node or a User Equipment (UE) can include a long-range communication system (such as a mobile device, a smart phone, a Personal Digital Assistant (PDA), a tablet, a laptop computer) or a short-range communication system (such as a wearable device, a vehicle with a vehicular communication system, or the like). As shown, the system 100 includes BSs 110, 120, and 130 and UEs 140 and 150. In some arrangements, the BSs 110, 120, and 130 can be referred to as a wireless communication node, and the UEs 140 and 150 can be referred to as a wireless communication device.

As shown in FIG. 1, the BS 110 (e.g., a network device) can provide wireless communication services to the UEs within a cell defined by a first boundary 112 and a second boundary 114, which encloses a greater area than the first boundary 112. The UE 140 is located within the first boundary 112, and the UE 150 is located between the first boundary 112 and the second boundary 114 (within the second boundary 114 but not within the first boundary 112). The area between the first boundary 112 and the second boundary 114 is an edge cell. A UE (e.g., the UE 150) located within the edge cell experiences reduced service (e.g., signal strength) than a UE (e.g., the UE 140) located within the first boundary 112. The UE 140 can communicate with the BS 110 via a first communication channel. Similarly, the UE 150 can communicate with the BS 110 via a second communication channel.

The BS 120 can provide wireless communication services to the UEs within a cell defined by a first boundary 122 and a second boundary 124, which encloses a greater area than the first boundary 122. The UE 150 is located between the first boundary 122 and the second boundary 124 (within the second boundary 124 but not within the first boundary 122). The area between the first boundary 122 and the second boundary 124 is an edge cell. Similarly, a UE located within the edge cell experiences reduced service (e.g., signal strength) than a UE located within the first boundary 122. The UE 150 can communicate with the BS 120 via a third communication channel.

The BS 130 can provide wireless communication services to the UEs within a cell defined by a first boundary 132 and a second boundary 134, which encloses a greater area than the first boundary 132. The area between the first boundary 132 and the second boundary 134 is an edge cell. Similarly, a UE located within the edge cell experiences reduced service (e.g., signal strength) than a UE located within the first boundary 132.

TDD CJT is introduced in 5G-advanced New Radio (NR) to improve downlink capability for cell-edge UEs (e.g., the UE 150 with respect to the BS 110). In TDD CJT, a CJT UE (e.g., the UE 150) transmits an SRS towards multiple CJT TRPs (e.g., the BSs 110 and 120). A BS can implement downlink CJT based on the precoder derived from the received SRS. From TRP perspective, a CJT TRP (e.g., the BS 110) receives SRSs transmitted from both its own serving UEs (e.g., the UE 140) and another TRPs' serving UEs (CJT UEs, e.g., the BS 120's serving UE150). Due to per-TRP SRS resource allocation, SRSs transmitted from different TRPs' serving UEs may be un-orthogonal and interfere each other. To randomize the interference and improve CJT performance, comb offset hopping and cyclic shift hopping of SRS in addition to frequency hopping and group/sequence hopping can be used. The newly introduced comb offset/cyclic shift hopping can be limited within a comb offset/cyclic shift subset to support the coexistence of legacy and new UEs within a cell.

As used herein, a legacy UE (and SRS resources, SRS ports thereof) refers to a UE that does not support comb offset/cyclic shift hopping. A new UE (and SRS resources, SRS ports thereof) denote a UE that supports comb offset/cyclic shift hopping.

FIG. 2 illustrates a block diagram of an example BS 202 (e.g., a network device) and an example UE 204, in accordance with some arrangements. The BS 202 is an example of the BSs 110, 120, and 130. The UE 204 is an example of the UEs 140 and 150.

The BS 202 includes a BS transceiver module 210, a BS antenna 212, a BS processor module 214, a BS memory module 216, and a network communication module 218, each module being coupled and interconnected with one another as needed via a data communication bus 220. The UE 204 includes a UE transceiver module 230, a UE antenna 232, a UE memory module 234, and a UE processor module 236, each module being coupled and interconnected with one another as necessary via a data communication bus 240. The BS 202 communicates with the UE 204 via a communication channel, which can be any wireless channel or other medium suitable for transmission of data as described herein.

The BS 202 and the UE 204 may further include any number of modules other than the modules shown in FIG. 2. Those skilled in the art will understand that the various illustrative blocks, modules, circuits, and processing logic described in connection with the implementations disclosed herein may be implemented in hardware, computer-readable software, firmware, or any practical combination thereof. To clearly illustrate this interchangeability and compatibility of hardware, firmware, and software, various illustrative components, blocks, modules, circuits, and steps are described generally in terms of their functionality. Whether such functionality is implemented as hardware, firmware, or software can depend upon the particular application and design constraints imposed on the overall system. Those familiar with the concepts described herein may implement such functionality in a suitable manner for each particular application, but such implementation decisions should not be interpreted as limiting the scope of the present disclosure.

In accordance with some implementations, the UE transceiver 230 may be referred to herein as a UL transceiver that includes a Radio Frequency (RF) transmitter and a RF receiver each including circuitry that is coupled to the antenna 232. A duplex switch (not shown) may alternatively couple the UL transmitter or receiver to the UL antenna in time duplex fashion. Similarly, in accordance with some implementations, the BS transceiver 210 may be referred to herein as a Downlink (DL) transceiver that includes a RF transmitter and a RF receiver each including circuity that is coupled to the antenna 212. A DL duplex switch may alternatively couple the DL transmitter or receiver to the DL antenna 212 in time duplex fashion. The operations of the two transceiver modules 210 and 230 can be coordinated in time such that the UL receiver circuitry is coupled to the UL antenna 232 for reception of transmissions over the wireless transmission link at the same time that the DL transmitter is coupled to the DL antenna 212. In some implementations, there is close time synchronization with a minimal guard time between changes in duplex direction.

The UE transceiver 230 and the BS transceiver 210 are configured to communicate via a wireless data communication link, and cooperate with a suitably configured RF antenna arrangement 212/232 that can support a particular wireless communication protocol and modulation scheme. In some implementations, the UE transceiver 210 and the BS transceiver 210 are configured to support industry standards such as the Long Term Evolution (LTE) and emerging 5G and 6G standards, and the like. It is understood, however, that the present disclosure is not necessarily limited in application to a particular standard and associated protocols. Rather, the UE transceiver 230 and the BS transceiver 210 may be configured to support alternate, or additional, wireless data communication protocols, including future standards or variations thereof.

The processor modules 214 and 236 may be implemented, or realized, with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. In this manner, a processor may be realized as a microprocessor, a controller, a microcontroller, a state machine, or the like. A processor may also be implemented as a combination of computing devices, e.g., a combination of a digital signal processor and a microprocessor, a plurality of microprocessors, one or more microprocessors in conjunction with a digital signal processor core, or any other such configuration.

Furthermore, the methods described in connection with the implementations disclosed herein may be implemented directly in hardware, in firmware, in a software module executed by processor modules 214 and 236, respectively, or in any practical combination thereof. The memory modules 216 and 234 may be realized as RAM memory, flash memory, ROM memory, EPROM memory, EEPROM memory, registers, a hard disk, a removable disk, a CD-ROM, or any other form of storage medium known in the art. In this regard, memory modules 216 and 234 may be coupled to the processor modules 210 and 230, respectively, such that the processors modules 210 and 230 can read information from, and write information to, memory modules 216 and 234, respectively. The memory modules 216 and 234 may also be integrated into their respective processor modules 210 and 230. In some implementations, the memory modules 216 and 234 may each include a cache memory for storing temporary variables or other intermediate information during execution of instructions to be executed by processor modules 210 and 230, respectively. Memory modules 216 and 234 may also each include non-volatile memory for storing instructions to be executed by the processor modules 210 and 230, respectively.

The network communication module 218 represents the hardware, software, firmware, processing logic, and/or other components of the BS 202 that enable bi-directional communication between BS transceiver 210 and other network components and communication nodes configured to communication with the BS 202. For example, network communication module 218 may be configured to support internet or WiMAX traffic. In a typical deployment, without limitation, network communication module 218 provides an 802.3 Ethernet interface such that BS transceiver 210 can communicate with a conventional Ethernet based computer network. In this manner, the network communication module 218 may include a physical interface for connection to the computer network (e.g., Mobile Switching Center (MSC)).

The terms "configured for," "configured to" and conjugations thereof, as used herein with respect to a specified operation or function, refer to a device, component, circuit, structure, machine, signal, etc., that is physically constructed, programmed, formatted and/or arranged to perform the specified operation or function.

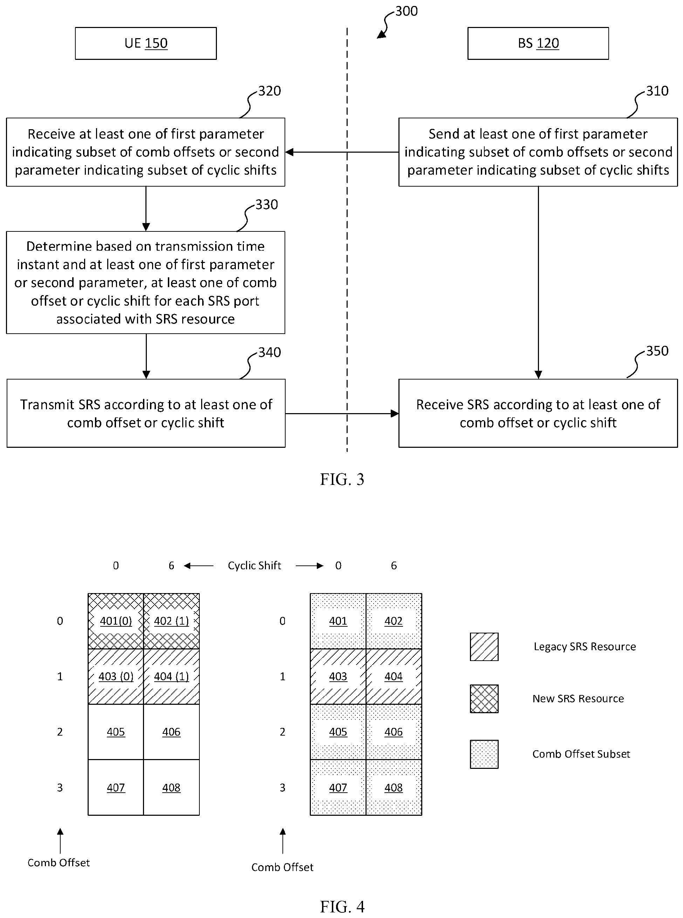

In some arrangements in which comb offset/cyclic shift hopping is enabled for an SRS resource, at each transmission occasion, the comb offset/cyclic shift of each SRS port associated with the SRS resource is determined by a time instant of the transmission occasion. FIG. 3 is a flowchart diagram illustrating an example method 300 for determining a comb offset and a cyclic shift hopping for an SRS port of an SRS resource, according to various arrangements. The method 300 can be performed using the system 100, including the UE 150 and the BS 120 (e.g., a network device). In some examples, the BS 120 sends to the UE 150, and the UE 150 receives from the BS 120, indication that at least one of comb offset or cyclic shift hopping is enabled. The indication can be provided via suitable signaling or parameters, including a higher layer parameter.

In some examples, examples of the higher layer parameter include Radio Resource Control (RRC) parameter, Radio Resource Management (RRM) parameter, Radio Resource Arrangement (RRA) parameter, Downlink Control Information (DCI), or Physical Down-link Control Channel (PDCCH).

The BS 120 sends to the UE 150 at least one parameter controlling configurations for or determination of one or more comb offsets and/or one or more cyclic shifts of SRS ports. For example, at 310, the BS 120 sends to the UE 150 at least one of first parameter indicating a subset of comb offsets or a second parameter indicating a subset of cyclic shifts. At 320, the UE 150 receives from the BS 120 the at least one of first parameter indicating the subset of comb offsets or the second parameter indicating the subset of cyclic shifts. Each of the at least one first parameter and each of the at least one second parameter can be provided via suitable signaling or parameters, including a higher layer parameter. The comb offset used for transmitting the SRS is limited within the comb offset subset. The cyclic shift used for transmitting the SRS is limited within the cyclic shift subset. In some examples, the BS 120 sends to the UE 150, and the UE 150 receives from the BS 120, at least one parameter indicating an initialization identifier (ID) of the pseudo-random sequence $c(i)$.

At 330, the UE 150 determines based on a transmission time instant and the at least one of the first parameter or the second parameter, at least one of a comb offset or a cyclic shift for each SRS port associated with an SRS resource. An SRS resource can be associated with multiple SRS ports. An SRS resource can include a time-domain resource and a frequency-domain resource.

At 340, the UE 150 transmits to the BS 120 the SRS according to the at least one of the comb offset or the cyclin shift. At 350, the BS 120 receives the SRS transmitted according to the at least one of the comb offset or the cyclin shift.

In some examples, legacy and new SRS resources (e.g., SRS resources used by legacy and new UEs) are scheduled over overlapping Orthogonal Frequency-Division Multiplexing (OFDM) symbols. The legacy and new SRS resources are configured with a same transmission comb. In the examples in which comb offset and/or cyclic shift hopping are not enabled, the legacy and new SRS resources do not occupy a same cyclic shift on a same comb offset. Such configurations can be enabled or otherwise provided by configuration of the BS sent to the UEs.

In some arrangements, for an SRS resource configured with comb offset hopping, at an SRS transmission occasion, the comb offset $k_{\mathrm{TC}}^{\mathrm{hopping},(p_i)}$ of an SRS port $p_i$ is determined by at least one of: the initial comb offset $k_{\mathrm{TC}}^{(p_i)}$ of SRS port $p_i$ (which is determined by the higher layer parameter *transmission Comb*), the time instant of the SRS transmission occasion (in a time unit of symbol, R symbols, slot, ms, etc.), the pseudo-random sequence $c(i)$, a parameter or parameters indicating a subset of comb offsets, or so on. In some examples, the comb offset for each SRS port associated with the SRS resource is determined based on at least one of an initial comb offset (e.g., $k_{\mathrm{TC}}^{(p_i)}$), the transmission time instant of a transmission occasion of the SRS, a pseudo-random sequence, or the first parameter indicating the subset of the comb offsets. As used herein, a time unit refers to a unit or measurement of time, such as a sub-symbol, symbol, slot, sub-frame, frame, transmission occasion, or so on.

The subset of comb offsets can be indicated by the higher layer parameter *transmissionComb,* and one of: a set of comb offset hopping offsets $K_{\mathrm{TC}}^{\mathrm{offset}}$ and a comb offset hopping granularity X. In some examples, the first parameter includes a parameter *transmissionComb* indicating a transmission comb and a maximum number of cyclic shifts of the SRS resource, an initial comb offset, and an initial cyclic shift of each SRS port associated with the SRS resource. In some examples, the first parameter includes one of a set of comb offset hopping offsets $K_{\mathrm{TC}}^{\mathrm{offset}}$ or a comb offset hopping granularity X.

In some examples, $K_{\mathrm{TC}}^{\mathrm{offset}}$ includes $L_{\mathrm{TC}}$ comb offset hopping offsets, where $L_{\mathrm{TC}} \leq K_{\mathrm{TC}}$, $K_{\mathrm{TC}}$ is a parameter in *transmission Comb* corresponding to the transmission comb. Each comb offset hopping offset $K_{\mathrm{TC}}^{\mathrm{offset}}(l)$ in $K_{\mathrm{TC}}^{\mathrm{offset}}$ is an integer that satisfies $0 \leq K_{\mathrm{TC}}^{\mathrm{offset}}(l) \leq K_{\mathrm{TC}} - 1$. For example, $K_{\mathrm{TC}}^{\mathrm{offset}} = \{0, 2, 3\}$ for $K_{\mathrm{TC}} = 4$. In some examples, the set of comb offset hopping offsets includes a number (e.g., $L_{\mathrm{TC}}$) of comb offset hopping offsets, the number is less than or equal to the transmission comb, and each of the comb offset hopping offsets is an integer greater than or equal to 0 and less than or equal to the transmission comb minus 1.

In some examples, $K_{\mathrm{TC}}^{\mathrm{offset}}$ can be indicated by a bitmap of length $K_{\mathrm{TC}}$. In some examples in which the ith element in the bitmap is 1, the value i - 1 is included in $K_{\mathrm{TC}}^{\mathrm{offset}}$. In some examples in which the ith element in the bitmap is 0, the value i - 1 is not included in $K_{\mathrm{TC}}^{\mathrm{offset}}$. For example, $K_{\mathrm{TC}}^{\mathrm{offset}} = \{0, 2, 3\}$ for $K_{\mathrm{TC}} = 4$ can be indicated by a bitmap of $\{1, 0, 1, 1\}$. In some examples, the UE 150 receives from the BS 120 (e.g., the network device) a bitmap indicating the set of comb offset hopping offsets, a length of the bitmap is equal to the transmission comb. In some examples in which $K_{\mathrm{TC}}^{\mathrm{offset}} = \{0, 1, ..., K_{\mathrm{TC}} - 1\}$, the subset of comb offsets is equivalent to the entire set of comb offsets.

In some examples, the comb offset hopping granularity is an integer greater than or equal to 1. The comb offset hopping granularity is selected from a set of candidate values. The set of candidate values is determined based on the transmission comb. For example, the candidate values of $X$ are $\{1, 2, 4, 8\}$. For $K_{\mathrm{TC}} = 2$, the candidate values of $X$ include $\{1, 2\}$. For $K_{\mathrm{TC}} = 4$, the candidate values of $X$ include $\{1, 2, 4\}$. For $K_{\mathrm{TC}} = 8$, the candidate values of $X$ include $\{1, 2, 4, 8\}$. In some examples in which $X = 1$, the subset of comb offsets is equivalent to the entire set of comb offsets. $K_{\mathrm{TC}}^{\mathrm{offset}}$ or $X$ can be configurable higher layer parameters, can be implicitly configured and indicated by the higher layer parameter *transmissionComb,* or can be fixed/default parameters. In some examples, the set of comb offset hopping offsets or the comb offset hopping granularity is configured by the BS 120 to the UE 150 using at least one higher layer parameter. In some examples, the set of comb offset hopping offsets or the comb offset hopping granularity is indicated using the parameter *transmissionComb.* In some examples, the set of comb offset hopping offsets or the comb offset hopping granularity is a fixed parameter.

In some examples in which $K_{\text{TC}}^{\text{offset}}$ or $X$ are configured using the higher layer parameters, the higher layer parameters is configured by the base station per-SRS resource. In some examples, the set of comb offset hopping offsets or the comb offset hopping granularity is configured by the BS 120 to the UE 150 using at least one higher layer parameter. The at least one higher layer parameter is configured by the BS 120 for each SRS resource of a plurality of SRS resources.

In some examples in which $K_{\text{TC}}^{\text{offset}}$ or $X$ are configured using the higher layer parameters, the configuration or selection of $K_{\text{TC}}^{\text{offset}}$ or $X$ is based on at least one of the higher layer parameter *transmissionComb* and the comb offsets/cyclic shifts occupied by legacy SRS resources on the overlapping OFDM symbols. The principle of configuration or selection of $K_{\text{TC}}^{\text{offset}}$ or $X$ is to guarantee that the comb offset subset indicated by *transmissionComb* and one of $K_{\text{TC}}^{\text{offset}}$ and $X$ do not overlap with the comb offsets occupied by legacy SRS resources at a same cyclic shift on a same OFDM symbol. In some examples, the set of comb offset hopping offsets or the comb offset hopping granularity is configured by the BS 120 to the UE 150 using at least one higher layer parameter. The set of comb offset hopping offsets or the comb offset hopping granularity is determined by the BS 120 based on at least one of: the parameter *transmission-Comb;* or at least one comb offset or at least one cyclic shift occupied by at least one legacy SRS resource on at least one overlapping Orthogonal Frequency-Division Multiplexing (OFDM) symbol.

In some examples in which $K_{\text{TC}}^{\text{offset}}$ or $X$ are indicated by the higher layer parameter *transmissionComb*, $K_{\text{TC}}^{\text{offset}}$ and $X$ can be respectively determined according to:

$$K_{\text{TC}}^{\text{offset}} = \begin{cases} \{0\}, N_{\text{ap}}^{\text{SRS}} = 1, 2 \\ \{0\}, N_{\text{ap}}^{\text{SRS}} = 4, n_{\text{SRS}}^{\text{cs,max}} \in \{8, 12\}, \text{ and } n_{\text{SRS}}^{\text{cs}} < n_{\text{SRS}}^{\text{cs,max}}/2 \\ \{0\}, N_{\text{ap}}^{\text{SRS}} = 8, n_{\text{SRS}}^{\text{cs,max}} = 8, \text{ and } n_{\text{SRS}}^{\text{cs}} < n_{\text{SRS}}^{\text{cs,max}}/2 \\ \{0, K_{\text{TC}}/2\}, N_{\text{ap}}^{\text{SRS}} = 4, n_{\text{SRS}}^{\text{cs,max}} \in \{8, 12\}, \text{ and } n_{\text{SRS}}^{\text{cs}} \geq n_{\text{SRS}}^{\text{cs,max}}/2 \\ \{0, K_{\text{TC}}/2\}, N_{\text{ap}}^{\text{SRS}} = 4, n_{\text{SRS}}^{\text{cs,max}} = 6 \\ \{0, K_{\text{TC}}/2\}, N_{\text{ap}}^{\text{SRS}} = 8, n_{\text{SRS}}^{\text{cs,max}} = 8, \text{ and } n_{\text{SRS}}^{\text{cs}} \geq n_{\text{SRS}}^{\text{cs,max}}/2 \\ \{0, K_{\text{TC}}/2\}, N_{\text{ap}}^{\text{SRS}} = 8, n_{\text{SRS}}^{\text{cs,max}} = 12 \\ \{0, K_{\text{TC}}/4, K_{\text{TC}}/2, 3K_{\text{TC}}/4\}, N_{\text{ap}}^{\text{SRS}} = 8, n_{\text{SRS}}^{\text{cs,max}} = 6 \end{cases} \quad (1);$$

and

$$X = \begin{cases} K_{\text{TC}}, N_{\text{ap}}^{\text{SRS}} = 1, 2 \\ K_{\text{TC}}, N_{\text{ap}}^{\text{SRS}} = 4, n_{\text{SRS}}^{\text{cs,max}} \in \{8, 12\}, \text{ and } n_{\text{SRS}}^{\text{cs}} < n_{\text{SRS}}^{\text{cs,max}}/2 \\ K_{\text{TC}}, N_{\text{ap}}^{\text{SRS}} = 8, n_{\text{SRS}}^{\text{cs,max}} = 8, \text{ and } n_{\text{SRS}}^{\text{cs}} < n_{\text{SRS}}^{\text{cs,max}}/2 \\ K_{\text{TC}}/2, N_{\text{ap}}^{\text{SRS}} = 4, n_{\text{SRS}}^{\text{cs,max}} \in \{8, 12\}, \text{ and } n_{\text{SRS}}^{\text{cs}} \geq n_{\text{SRS}}^{\text{cs,max}}/2 \\ K_{\text{TC}}/2, N_{\text{ap}}^{\text{SRS}} = 4, n_{\text{SRS}}^{\text{cs,max}} = 6 \\ K_{\text{TC}}/2, N_{\text{ap}}^{\text{SRS}} = 8, n_{\text{SRS}}^{\text{cs,max}} = 8, \text{ and } n_{\text{SRS}}^{\text{cs}} \geq n_{\text{SRS}}^{\text{cs,max}}/2 \\ K_{\text{TC}}/2, N_{\text{ap}}^{\text{SRS}} = 8, n_{\text{SRS}}^{\text{cs,max}} = 12 \\ K_{\text{TC}}/4, N_{\text{ap}}^{\text{SRS}} = 8, n_{\text{SRS}}^{\text{cs,max}} = 6 \end{cases} \quad (2).$$

where $n_{\text{SRS}}^{\text{cs}}$ is a parameter included in the parameter *transmissionComb* denoting a starting cyclic shift, and $n_{\text{SRS}}^{\text{cs,max}}$ is a maximum number of cyclic shifts, $N_{\text{ap}}^{\text{SRS}}$ is a number of antenna ports, and $K_{\text{TC}}$ the transmission comb. In some examples, the set of comb offset hopping offsets or the comb offset hopping granularity is configured by the BS 120 to the UE 150 using *transmissionComb.* The set of comb offset hopping offsets is determined according to expression (1), and the comb offset hopping granularity is determined according to expression (2).

In some arrangements, multiple new SRS resources are scheduled over overlapping OFDM symbols and overlapping frequency ranges (e.g., Resource Blocks (RBs)) to maintain the orthogonality among new SRS ports, and different new SRS resources can be configured with different subsets of comb offsets. In some examples, a plurality of new SRS resources are scheduled over overlapping OFDM symbols. New SRS ports are orthogonal to each other. Different ones of the plurality of new SRS resources are configured with different subsets of comb offsets.

In some arrangements, multiple new SRS resources are scheduled over overlapping OFDM symbols and overlapping frequency ranges (e.g., RBs) to maintain the orthogonality among new SRS ports, and different new SRS resources can be configured with a same subset of comb offsets. A same initialization ID of $c(i)$ is expected to be applied for all the new SRS resources. In some examples, a plurality of new SRS resources are scheduled over overlapping Orthogonal OFDM symbols. New SRS ports are orthogonal to each other. Different ones of the plurality of new SRS resources are configured with a same subset of comb offsets. A same initialization ID of a pseudo-random sequence $c(i)$ applies for all of the plurality of new SRS resources.

In some arrangements, the comb offset $k_{\mathrm{TC}}^{\mathrm{hopping},(p_i)}$ of an SRS port $p_i$ can be determined by:

$$k_{\mathrm{TC}}^{\mathrm{hopping},(p_i)} = \left( k_{\mathrm{TC}}^{(p_i)} + k_{\mathrm{TC}}^{\mathrm{offset}} \right) \bmod K_{\mathrm{TC}} \qquad (3),$$

where $k_{\mathrm{TC}}^{\mathrm{offset}}$ is a hopping offset belonging to the set of comb offset hopping offsets. The hopping offset $k_{\mathrm{TC}}^{\mathrm{offset}}$ is determined by at least one of: $K_{\mathrm{TC}}^{\mathrm{offset}}$, $L_{TC}$, $X$, and a random or pseudo-random number $f_{\mathrm{hopping}}$. In some examples, the hopping offset $k_{\mathrm{TC}}^{\mathrm{offset}}$ can be determined by:

$$k_{\mathrm{TC}}^{\mathrm{offset}} = K_{\mathrm{TC}}^{\mathrm{offset}} \left( \left( f_{\mathrm{hopping}} \bmod L_{\mathrm{TC}} \right) + 1 \right) \qquad (4),$$

where $K_{\mathrm{TC}}^{\mathrm{offset}}(l)$ denotes the Ith element of $K_{\mathrm{TC}}^{\mathrm{offset}}$. In some examples, the hopping offset $k_{\mathrm{TC}}^{\mathrm{offset}}$ can be determined by:

$$k_{\mathrm{TC}}^{\mathrm{offset}} = X \cdot f_{\mathrm{hopping}} \qquad (5),$$

where $f_{\mathrm{hopping}}$ is a pseudo-random integer determined by at least one of: the time instant t of the SRS transmission occasion, the pseudo-random sequence $c(i)$, and an integer M. For example, $f_{\mathrm{hopping}}$ can be determined according to:

$$f_{\mathrm{hopping}} = \sum_{m=0}^{M-1} c(M \cdot (t) + m) \cdot 2^m \qquad (6),$$

and

$$t = (SFN \bmod N) N_{\mathrm{slot}}^{\mathrm{frame},\mu} N_{\mathrm{symb}}^{\mathrm{slot}} + n_{s,f}^{\mu} N_{\mathrm{symb}}^{\mathrm{slot}} + l' \qquad (7),$$

where $l'$ can be the OFDM symbol index of each SRS symbol or the OFDM symbol index of the first SRS symbol across a number (e.g., R) repetitions, $N_{\mathrm{symb}}^{\mathrm{slot}}$ is a number of symbols in a slot, $N_{\mathrm{slot}}^{\mathrm{frame},\mu}$ is a number of slots in a frame, SFN stands for System Frame Number, $n_{s,f}^{\mu}$ is a slot number within a frame. In some examples, the integer M can be a configurable higher layer parameter or a fixed/default value.

In some examples, the comb offset $k_{\mathrm{TC}}^{\mathrm{hopping},(p_i)}$ for the SRS port $p_i$ is determined by expression (3). $k_{\mathrm{TC}}^{(p_i)}$ is

the initial comb offset of SRS port $p_i$. $K_{TC}$ is the transmission comb. $k_{TC}^{\text{offset}}$ is a comb offset hopping offset belonging to the set of comb offset hopping offsets. In some examples, the comb offset hopping offset can be determined by (4).

$K_{TC}^{\text{offset}}(l)$ denotes the $l$th element of $K_{TC}^{\text{offset}}$. $K_{TC}^{\text{offset}}$ is the set of comb offset hopping offsets. $L_{TC}$ is a number of comb offset hopping offsets included in $K_{TC}^{\text{offset}}$. In some examples, the comb offset hopping offset can be determined by (5). $X$ is the comb offset hopping granularity. $f_{\text{hopping}}$ is a pseudo-random integer determined by at least one of the transmission time instant t of an SRS transmission occasion, the pseudo-random sequence c(i), and an integer M.

In some examples, the configuration or selection of $M$ by the base station can be determined by at least one of $L_{TC}$, max($L_{TC}$), $K_{TC}$, and max($K_{TC}$). That is, in some examples, the integer is determined based on at least one of $L_{TC}$, maximum value of $L_{TC}$, the transmission comb, or the maximum value of the transmission comb. In some examples, the integer M can be determined according to:

$$M = \lceil \log_2(L_{TC}) \rceil + q \qquad (8),$$

where the candidate values of $q$ are {0, 1, 2, 3, 4}. In some examples, the integer M can be determined according to:

$$M = \lceil \log_2(\max(L_{TC})) \rceil + q \qquad (9),$$

where the candidate values of $q$ are {0, 1, 2, 3, 4}. In some examples, the integer M can be determined according to:

$$M = \lceil \log_2(K_{TC}) \rceil + q \qquad (10),$$

where the candidate values of $q$ are {-4, -3, -2, -1, 0, 1, 2, 3, 4}. In some examples, the integer M can be determined according to:

$$M = \lceil \log_2(\max(K_{TC})) \rceil + q \qquad (11),$$

where the candidate values of $q$ are {-4, -3, -2, -1, 0, 1, 2, 3, 4}.

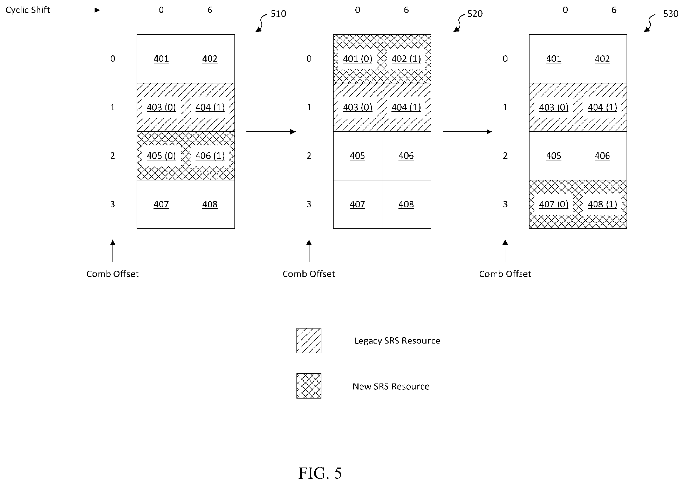

FIG. 4 is a diagram illustrating a configuration of comb offset hopping, according to various arrangements. FIG. 5 is a diagram illustrating an implementation of comb offset hopping, according to various arrangements. Each of the orthogonal resources 401, 402, 403, 404, 405, 406, 407, and 408 corresponds to a combination of a comb offset (e.g., 0, 1, 2, or 3) and a cyclic shift (e.g., 0 or 6).

In FIGS. 4 and 5, the transmission comb $K_{TC}$ is 4. When comb offset hopping is not enabled, the legacy 2-port SRS resource occupies 1 comb offset, (i.e., $k_{TC}^{(p_i)} = \{1\}$), the legacy SRS ports 1000 and 1001 occupy orthogonal resources 403 and 404, respectively. When comb offset hopping is not enabled, the new 2-port SRS resource occupies 1 comb offset (i.e., $k_{TC}^{(p_i)} = \{0\}$), the new SRS ports 1000 and 1001 occupy orthogonal resources 401 and 402, respectively. The index i in the brackets after the orthogonal resource index indicate that this resource is occupied by SRS port $p_i$ = 1000 + i.

As shown in FIG. 4, configuration of the subset of comb offsets includes $K_{TC}^{\text{offset}} = \{0, 2, 3\}$. When comb offset hopping is enabled, the orthogonal resources occupied by the new SRS resource belong to orthogonal resources 401, 402, 405, 406, 407, and 408.

As shown in FIG. 5, to implement the comb offset hopping, implementation 510 can be defined by $k_{TC}^{\text{offset}} = 2$ and $k_{TC}^{\text{hopping},(p_i)} = \{2\}$, the new SRS resource occupies orthogonal resources 405 and 406. Implementation 520 can be defined by $k_{TC}^{\text{offset}} = 0$ and $k_{TC}^{\text{hopping},(p_i)} = \{0\}$, the new SRS resource occupies orthogonal resources 401 and 402. Implementation 530 can be defined by $k_{\text{TC}}^{\text{offset}} = 3$ and $k_{\text{TC}}^{\text{hopping},(p_i)} = \{3\}$, the new SRS resource occupies orthogonal resources 407 and 408. The index i in the brackets after the orthogonal resource index indicate that this resource is occupied by SRS port $p_i$ = 1000 + i.

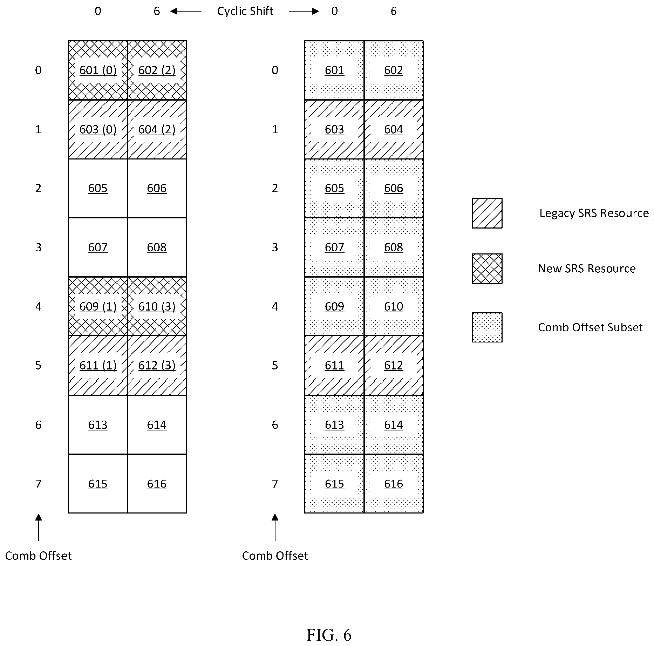

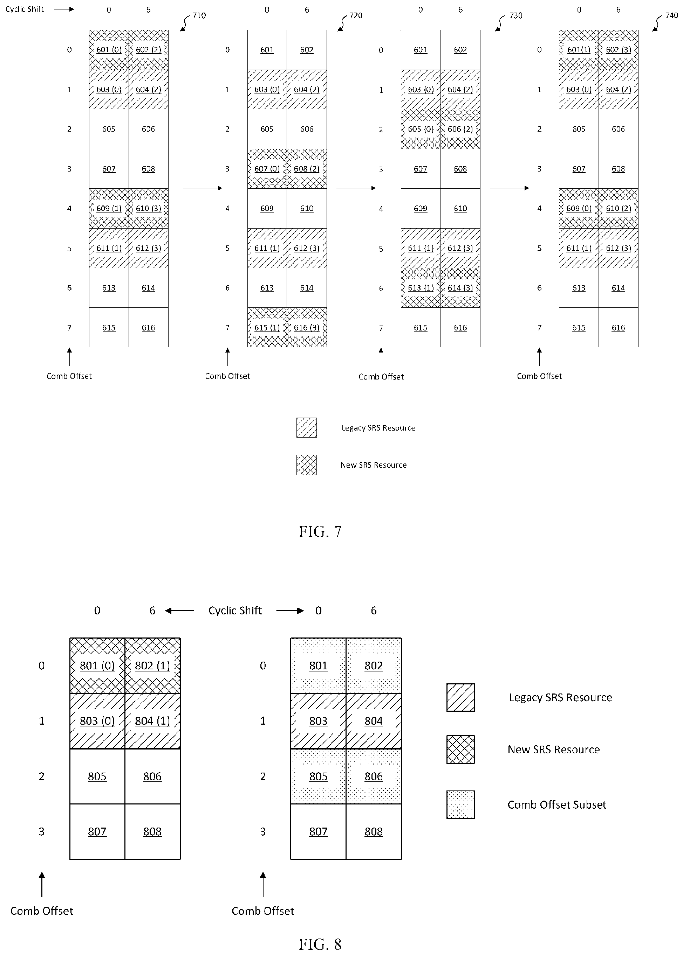

FIG. 6 is a diagram illustrating a configuration of comb offset hopping, according to various arrangements. FIG. 7 is a diagram illustrating an implementation of comb offset hopping, according to various arrangements. Each of the orthogonal resources 601, 602, 603, 604, 605, 606, 607, 608, 609, 610, 611, 612, 613, 614, 615, and 616 corresponds to a combination of a comb offset (e.g., 0, 1, 2, 3, 4, 5, 6, or 7) and a cyclic shift (e.g., 0 or 6).

In FIGS. 6 and 7, the transmission comb $K_{\text{TC}}$ is 8. When comb offset hopping is not enabled, the legacy 4-port SRS resource occupies 2 comb offsets (i.e., $k_{\text{TC}}^{(p_i)} = \{1, 5\}$), the legacy SRS ports 1000, 1002, and 1003 occupy orthogonal resources 603, 604, 611, and 612, respectively. When comb offset hopping is not enabled, the new 4-port SRS resource occupies 2 comb offsets(i.e., $k_{\text{TC}}^{(p_i)} = \{0, 4\}$), the new SRS ports 1000, 1001, 1002, 1003 occupy orthogonal resources 601, 602, 609, and 610, respectively. The index i in the brackets after the orthogonal resource index indicate that this resource is occupied by SRS port $p_i$ = 1000 + i.

As shown in FIG. 6, configuration of the subset of comb offsets includes $K_{\text{TC}}^{\text{offset}} = \{0, 2, 3, 4, 5, 6, 7\}$. When comb offset hopping is enabled, the orthogonal resources occupied by the new SRS resource belong to orthogonal resources 601, 602, 605, 606, 607, 608, 609, 610, 613, 614, 615, and 616.

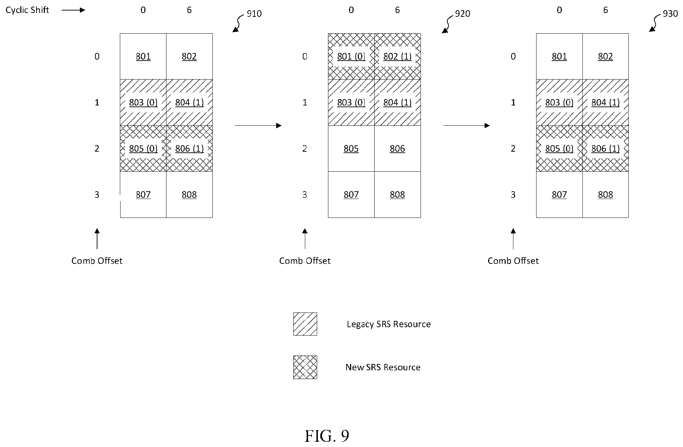

As shown in FIG. 7, to implement the comb offset hopping, implementation 710 can be defined by $k_{\text{TC}}^{\text{offset}} = 0$ and $k_{\text{TC}}^{\text{hopping},(p_i)} = \{0, 4\}$, the new SRS resource occupies orthogonal resources 601, 602, 609, 610. Implementation 720 can be defined by $k_{\text{TC}}^{\text{offset}} = 3$ and $k_{\text{TC}}^{\text{hopping},(p_i)} = \{3, 7\}$, the new SRS resource occupies orthogonal resources 607, 608, 615, 616. Implementation 730 can be defined by $k_{\text{TC}}^{\text{offset}} = 2$ and $k_{\text{TC}}^{\text{hopping},(p_i)} = \{2, 6\}$, the new SRS resource occupies orthogonal resources 605, 606, 613, and 614. Implementation 740 can be defined by $k_{\text{TC}}^{\text{offset}} = 4$ and $k_{\text{TC}}^{\text{hopping},(p_i)} = \{4, 0\}$, the new SRS resource occupies orthogonal resources 601, 602, 609, and 610. The index i in the brackets after the orthogonal resource index indicate that this resource is occupied by SRS port $p_i$ = 1000 + i.FIG. 8 is a diagram illustrating a configuration of comb offset hopping, according to various arrangements. FIG. 9 is a diagram illustrating an implementation of comb offset hopping, according to various arrangements. Each of the orthogonal resources 801, 802, 803, 804, 805, 806, 807, and 808 corresponds to a combination of a comb offset (e.g., 0, 1, 2, or 3) and a cyclic shift (e.g., 0 or 6).

In FIGS. 8 and 9, the transmission comb $K_{\text{TC}}$ is 4. When comb offset is not enabled, the legacy 2-port SRS resource occupies 1 comb offset (i.e., $k_{\text{TC}}^{(p_i)} = \{1\}$), the legacy SRS ports 1000 and 1001 occupy orthogonal resources 803 and 804, respectively. When comb offset hopping is not enabled, the new 2-port SRS resource occupies 1 comb offset (i.e., $k_{\text{TC}}^{(p_i)} = \{0\}$), the new SRS ports 1000 and 1001 occupy orthogonal resources 801 and 802, respectively. The index i in the brackets after the orthogonal resource index indicate that this resource is occupied by SRS port $p_i$ = 1000 + i

As shown in FIG. 8, configuration of the subset of comb offsets includes X = 2. When comb offset hopping is enabled, the orthogonal resources occupied by the new SRS resource belong to orthogonal resources 801, 802, 805, 806.

As shown in FIG. 9, to implement the comb offset hopping, implementation 910 can be defined by $k_{\text{TC}}^{\text{offset}} = 2$ and $k_{\text{TC}}^{\text{hopping},(p_i)} = \{2\}$, the new SRS resource occupies orthogonal resources 805 and 806. Implementation 920 can be defined by $k_{\text{TC}}^{\text{offset}} = 16$ and $k_{\text{TC}}^{\text{hopping},(p_i)} = \{0\}$, the new SRS resource occupies orthogonal resources 801 and 802. Implementation 930 can be defined by $k_{\text{TC}}^{\text{offset}} = 22$ and $k_{\text{TC}}^{\text{hopping},(p_i)} = \{2\}$, the new SRS resource occupies orthogonal resources 805 and 806. The index i in the brackets after the orthogonal resource index indicate that this resource is occupied by SRS port $p_i$ = 1000 + i

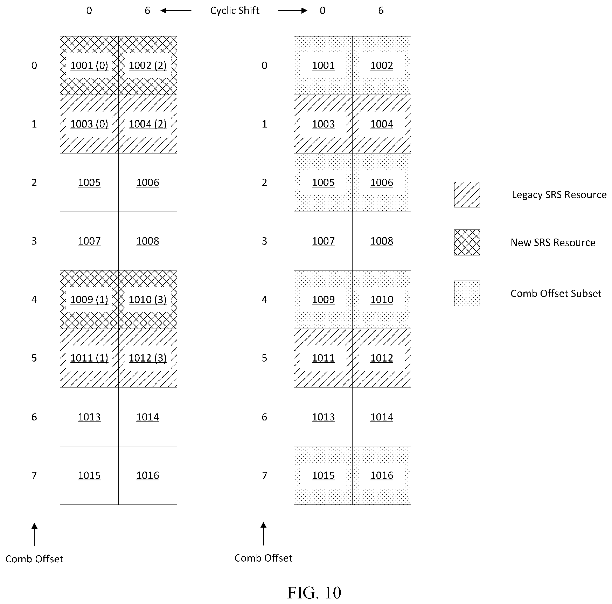

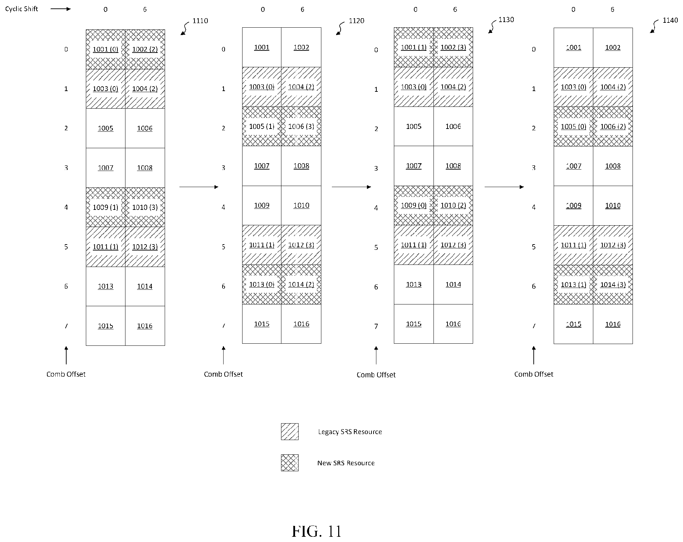

FIG. 10 is a diagram illustrating a configuration of comb offset hopping, according to various arrangements. FIG. 11 is a diagram illustrating an implementation of comb offset hopping, according to various arrangements. Each of the orthogonal resources 1001, 1002, 1003, 1004, 1005, 1006, 1007, 1008, 1009, 1010, 1011, 1012, 1013, 1014, 1015, and 1016 corresponds to a combination of a comb offset (e.g., 0, 1, 2, 3, 4, 5, 6, or 7) and a cyclic shift (e.g., 0 or 6).

In FIGS. 10 and 11, the transmission comb $K_{\text{TC}}$ is 8. When comb offset hopping is not enabled, the legacy 4-port SRS resource occupies 2 comb offsets (i.e., $k_{\text{TC}}^{(p_i)} = \{1, 5\}$), the legacy ports 1000, 1001, 1002, and 1003 occupy orthogonal resources 1003, 1004, 1011, and 1012, respectively. When comb offset hopping is not enabled, the new 4-port SRS resource i occupies 2 comb offsets (i.e., $k_{\text{TC}}^{(p_i)} = \{0, 4\}$), the new SRS ports 1001, 1002, 1003, and 1004 occupy orthogonal resources 1001, 1002, 1009, and 1010, respectively. The index i in the brackets after the orthogonal resource index indicate that this resource is occupied by SRS port $p_i$ = 1000 + i.

As shown in FIG. 10, configuration of the subset of comb offsets includes X = 2. When comb offset hopping is enabled, the orthogonal resources occupied by the new SRS resource belong to orthogonal resources 1001, 1002, 1005, 1006, 1009, 1010, 1015, and 1016.

As shown in FIG. 11, to implement the comb offset hopping, implementation 1110 can be defined by $k_{\text{TC}}^{\text{offset}} = 64$ and $k_{\text{TC}}^{\text{hopping},(p_i)} = \{0, 4\}$, with the new SRS resource occupies orthogonal resources 1001, 1002, 1009, 1010. Implementation 1120 can be defined by $k_{\text{TC}}^{\text{offset}} = 46$ and $k_{\text{TC}}^{\text{hopping},(p_i)} = \{6, 2\}$, the new SRS resource occupies orthogonal resources 1005, 1006, 1013, 1014. Implementation 1130 can be defined by $k_{\text{TC}}^{\text{offset}} = 12$ and $k_{\text{TC}}^{\text{hopping},(p_i)} = \{4, 0\}$, the new SRS resource occupies orthogonal resources 1001, 1002, 1009, 1010. Implementation 1140 can be defined by $k_{\text{TC}}^{\text{offset}} = 82$ and $k_{\text{TC}}^{\text{hopping},(p_i)} = \{2, 6\}$, the new SRS resource occupies orthogonal resources 1005, 1006, 1013, 1014. The index i in the brackets after the orthogonal resource index indicate that this resource is occupied by SRS port $p_i$ = 1000 + i

In some arrangements, for an SRS resource configured with cyclic shift hopping, at an SRS transmission occasion, the cyclic shift $n_{\text{SRS}}^{\text{CS,hopping},i}$ of an SRS port $p_i$ is determined by at least one of: the initial cyclic shift $n_{\text{SRS}}^{\text{CS},i}$ of SRS port $p_i$ (which is determined by the higher layer parameter *transmission Comb),* the time instant of the SRS transmission occasion (in a time unit of symbol, R symbols, slot, ms etc.), the pseudo-random sequence *c(i),* a parameter or parameters indicating a subset of cyclic shift, or so on. In some examples, the cyclic shift for each SRS port associated with the SRS resource is determined based on at least one of an initial cyclic shift, the transmission time instant of a transmission occasion of the SRS, a pseudo-random sequence, or the second parameter indicating the subset of the cyclic shifts. As used herein, a time unit refers to a unit or measurement of time, such as a sub-symbol, symbol, slot, sub-frame, frame, transmission occasion, or so on.

The subset of cyclic shifts can be indicated by the higher layer parameter *transmissionComb,* and one of: a set of a set of cyclic shift hopping offsets $N_{\text{SRS}}^{\text{CS,offset}}$ and cyclic shift hopping granularity *X.* In some examples, the second parameter includes a parameter *transmissionComb* indicating a transmission comb and a maximum number of cyclic shifts of the SRS resource, an initial comb offset, and an initial cyclic shift of each SRS port associated with the SRS resource. In some examples, the first parameter includes a set of cyclic shift hopping offset. In some examples, the first parameter includes a cyclic shift granularity.

In some examples, $N_{\text{SRS}}^{\text{CS,offset}}$ includes $L_{\text{CS}}$ comb offset hopping offsets, where (

$L_{\mathrm{CS}} \leq n_{\mathrm{SRS}}^{\mathrm{CS,max}}$, $n_{\mathrm{SRS}}^{\mathrm{CS,max}}$ is a parameter in *transmissionComb* corresponding to the cyclic shift hopping. Each cyclic shift hopping offset $N_{\mathrm{SRS}}^{\mathrm{CS,offset}}(l)$ in $N_{\mathrm{SRS}}^{\mathrm{CS,offset}}$ is an integer that satisfies $0 \leq N_{\mathrm{SRS}}^{\mathrm{CS,offset}}(l) \leq n_{\mathrm{SRS}}^{\mathrm{CS,max}} - 1$.

For example, $N_{\mathrm{SRS}}^{\mathrm{CS,offset}} = \{1, 3, 4, 5, 6, 7\}$ for $n_{\mathrm{SRS}}^{\mathrm{CS,max}} = 8$. In some examples, the set of cyclic shift offsets includes a number (e.g., $L_{\mathrm{CS}}$) of cyclic shift offsets, the number is less than or equal to the maximum number of cyclic shifts, and each of the cyclic shift hopping offsets is an integer greater than or equal to 0 and less than or equal to the maximum number of cyclic shifts minus 1.

In some examples, $N_{\mathrm{SRS}}^{\mathrm{CS,offset}}$ can be indicated by a bitmap of length $n_{\mathrm{SRS}}^{\mathrm{CS,max}}$. In some examples in which the ith element in the bitmap is 1, the value i - 1 is included in $N_{\mathrm{SRS}}^{\mathrm{CS,offset}}$. In some examples in which the ith element in the bitmap is 0, the value i - 1 is not included in $N_{\mathrm{SRS}}^{\mathrm{CS,offset}}$. For example, $N_{\mathrm{SRS}}^{\mathrm{CS,offset}} = \{1, 3, 4, 5, 6, 7\}$ for $n_{\mathrm{SRS}}^{\mathrm{CS,max}} = 8$ can be indicated by a bitmap of {0, 1, 0, 1, 1, 1, 1, 1}. In some examples, the UE 150 receives from the BS 120 (e.g., the network device) a bitmap indicating the set of cyclic shift hopping offsets, a length of the bitmap is equal to the maximum number of cyclic shift. In some examples in which $N_{\mathrm{SRS}}^{\mathrm{CS,offset}} = \left\{0, 1, ..., n_{\mathrm{SRS}}^{\mathrm{CS,max}} - 1\right\}$, the subset of cyclic shifts is equivalent to the entire set of cyclic shifts.

In some examples, the cyclic shift hopping granularity is an integer greater than or equal to 1. The cyclic shift hopping granularity is selected from a set of candidate values. The set of candidate values is determined based on the maximum number of cyclic shifts. For example, the candidate values of $X$ are {1, 2, 4, 6, 8, 12}. For $n_{\mathrm{SRS}}^{\mathrm{CS,max}} = 8$, the candidate value of $X$ is {1, 2, 4, 8}. For $n_{\mathrm{SRS}}^{\mathrm{CS,max}} = 6$, the candidate values of $X$ are {1, 2, 3, 6}. For $n_{\mathrm{SRS}}^{\mathrm{CS,max}} = 12$, the candidate values of $X$ are {1, 2, 3, 4, 6, 12}. In some examples in which $X = 1$, the subset of cyclic shifts is equivalent to the entire set of cyclic shifts. $N_{\mathrm{SRS}}^{\mathrm{CS,offset}}$ or $X$ can be configurable higher layer parameters, can be implicitly configured and indicated by the higher layer parameter *transmission Comb,* or can be fixed/default parameters. In some examples, the set of cyclic shift hopping offsets or the cyclic shift hopping granularity is configured by the BS 120 to the UE 150 using at least one higher layer parameter. In some examples, the set of cyclic shift hopping offsets or the cyclic shift hopping granularity is indicated using the parameter *transmissionComb.* In some examples, the set of cyclic shift hopping offsets or the cyclic shift hopping granularity is a fixed parameter.

In some examples in which $N_{\mathrm{SRS}}^{\mathrm{CS,offset}}$ or $X$ are configured using the higher layer parameters, the higher layer parameters is configured by the base station per-SRS resource. In some examples, the set of cyclic shift hopping offsets or the cyclic shift hopping granularity is configured by the BS 120 to the UE 150 using at least one higher layer parameter. The at least one higher layer parameter is configured by the BS 120 for each SRS resource of a plurality of SRS resources.

In some examples in which $N_{\mathrm{SRS}}^{\mathrm{CS,offset}}$ or $X$ are configured using the higher layer parameters, the configuration or selection of $N_{SRS}^{CS,offset}$ or $X$ is based on at least one of the higher layer parameter *transmissionComb* and the comb offsets/cyclic shifts occupied by legacy SRS resources on the overlapping OFDM symbols. In some examples, the set of cyclic shift hopping offsets or the cyclic shift hopping granularity is configured by the BS 120 to the UE 150 using at least one higher layer parameter. The set of cyclic shift hopping offsets or the cyclic shift hopping granularity is determined by the BS 120 based on at least one of: the parameter *transmissionComb;* or at least one comb offset or at least one cyclic shift occupied by at least one legacy SRS resource on at least one overlapping OFDM symbol.

In some examples in which $N_{\mathrm{SRS}}^{\mathrm{CS,offset}}$ or $X$ are indicated by the higher layer parameter *transmissionComb,* $N_{\mathrm{SRS}}^{\mathrm{CS,offset}}$ and $X$ can be respectively determined according to:

$$N_{\text{SRS}}^{\text{CS,offset}} = \begin{cases} \{0, n_{\text{SRS}}^{\text{CS,max}}/N_{\text{ap}}^{\text{SRS}}, \dots\}, N_{\text{ap}}^{\text{SRS}} = 1, 2 \\ \{0, n_{\text{SRS}}^{\text{CS,max}}/N_{\text{ap}}^{\text{SRS}}, \dots\}, N_{\text{ap}}^{\text{SRS}} = 4, n_{\text{SRS}}^{\text{CS,max}} \in \{8, 12\}, n_{\text{SRS}}^{\text{CS}} < n_{\text{SRS}}^{\text{CS,max}}/2 \\ \{0, n_{\text{SRS}}^{\text{CS,max}}/N_{\text{ap}}^{\text{SRS}}, \dots\}, N_{\text{ap}}^{\text{SRS}} = 8, n_{\text{SRS}}^{\text{CS,max}} = 8, n_{\text{SRS}}^{\text{CS}} < n_{\text{SRS}}^{\text{CS,max}}/2 \\ \{0, n_{\text{SRS}}^{\text{CS,max}}/(N_{\text{ap}}^{\text{SRS}}/2), \dots\}, N_{\text{ap}}^{\text{SRS}} = 4, n_{\text{SRS}}^{\text{CS,max}} \in \{8, 12\}, n_{\text{SRS}}^{\text{CS}} \geq n_{\text{SRS}}^{\text{CS,max}}/2 \\ \{0, n_{\text{SRS}}^{\text{CS,max}}/(N_{\text{ap}}^{\text{SRS}}/2), \dots\}, N_{\text{ap}}^{\text{SRS}} = 4, n_{\text{SRS}}^{\text{CS,max}} = 6 \\ \{0, n_{\text{SRS}}^{\text{CS,max}}/(N_{\text{ap}}^{\text{SRS}}/2), \dots\}, N_{\text{ap}}^{\text{SRS}} = 8, n_{\text{SRS}}^{\text{CS,max}} = 8, n_{\text{SRS}}^{\text{CS}} \geq n_{\text{SRS}}^{\text{CS,max}}/2 \\ \{0, n_{\text{SRS}}^{\text{CS,max}}/(N_{\text{ap}}^{\text{SRS}}/2), \dots\}, N_{\text{ap}}^{\text{SRS}} = 8, n_{\text{SRS}}^{\text{CS,max}} = 12 \\ \{0, n_{\text{SRS}}^{\text{CS,max}}/(N_{\text{ap}}^{\text{SRS}}/4), \dots\}, N_{\text{ap}}^{\text{SRS}} = 8, n_{\text{SRS}}^{\text{CS,max}} = 6 \end{cases} \quad (12);$$

and

$$X = \begin{cases} n_{\text{SRS}}^{\text{CS,max}}/N_{\text{ap}}^{\text{SRS}}, N_{\text{ap}}^{\text{SRS}} = 1, 2 \\ n_{\text{SRS}}^{\text{CS,max}}/N_{\text{ap}}^{\text{SRS}}, N_{\text{ap}}^{\text{SRS}} = 4, n_{\text{SRS}}^{\text{CS,max}} \in \{8, 12\}, n_{\text{SRS}}^{\text{CS}} < n_{\text{SRS}}^{\text{CS,max}}/2 \\ n_{\text{SRS}}^{\text{CS,max}}/N_{\text{ap}}^{\text{SRS}}, N_{\text{ap}}^{\text{SRS}} = 8, n_{\text{SRS}}^{\text{CS,max}} = 8, n_{\text{SRS}}^{\text{CS}} < n_{\text{SRS}}^{\text{CS,max}}/2 \\ n_{\text{SRS}}^{\text{CS,max}}/(N_{\text{ap}}^{\text{SRS}}/2), N_{\text{ap}}^{\text{SRS}} = 4, n_{\text{SRS}}^{\text{CS,max}} \in \{8, 12\}, n_{\text{SRS}}^{\text{CS}} \geq n_{\text{SRS}}^{\text{CS,max}}/2 \\ n_{\text{SRS}}^{\text{CS,max}}/(N_{\text{ap}}^{\text{SRS}}/2), N_{\text{ap}}^{\text{SRS}} = 4, n_{\text{SRS}}^{\text{CS,max}} = 6 \\ n_{\text{SRS}}^{\text{CS,max}}/(N_{\text{ap}}^{\text{SRS}}/2), N_{\text{ap}}^{\text{SRS}} = 8, n_{\text{SRS}}^{\text{CS,max}} = 8, n_{\text{SRS}}^{\text{CS}} \geq n_{\text{SRS}}^{\text{CS,max}}/2 \\ n_{\text{SRS}}^{\text{CS,max}}/(N_{\text{ap}}^{\text{SRS}}/2), N_{\text{ap}}^{\text{SRS}} = 8, n_{\text{SRS}}^{\text{CS,max}} = 12 \\ n_{\text{SRS}}^{\text{CS,max}}/(N_{\text{ap}}^{\text{SRS}}/4), N_{\text{ap}}^{\text{SRS}} = 8, n_{\text{SRS}}^{\text{CS,max}} = 6 \end{cases} \quad (13),$$

where $n_{\text{SRS}}^{\text{cs}}$ is a parameter in the *transmissionComb*, $n_{\text{SRS}}^{\text{cs}}$ denotes a cyclic shift, $n_{\text{SRS}}^{\text{cs,max}}$ is the maximum number of cyclic shifts, and $N_{\text{ap}}^{\text{SRS}}$ is a number of antenna ports. In some examples, the set of cyclic shift t hopping offsets or the cyclic shift hopping granularity is configured by the BS 120 to the UE 150 using *transmissionComb.* The set of cyclic shift hopping offsets is determined according to expression (12), and the cyclic shift hopping granularity is determined according to expression (13).

In some arrangements, multiple new SRS resources are scheduled over overlapping OFDM symbols and overlapping frequency ranges (e.g., RBs) to maintain the orthogonality among new SRS ports, and different new SRS resources can be configured with different subsets of cyclic shifts. In some examples, a plurality of new SRS resources are scheduled over overlapping OFDM symbols. New SRS ports are orthogonal to each other. Different ones of the plurality of new SRS resources are configured with different subsets of cyclic shifts.

In some arrangements, multiple new SRS resources are scheduled over overlapping OFDM symbols and overlapping frequency ranges (e.g., RBs) to maintain the orthogonality among new SRS ports, and different new SRS resources can be configured with a same subset of cyclic shifts. A same initialization ID of *c(i)* is expected to be applied for all the new SRS resources. In some examples, a plurality of new SRS resources are scheduled over overlapping Orthogonal OFDM symbols. New SRS ports are orthogonal to each other. Different ones of the plurality of new SRS resources are configured with a same subset of cyclic shift. A same initialization ID of a pseudo-random sequence *c(i)* applies for all of the plurality of new SRS resources.

In some arrangements, the cyclic shift $n_{\text{SRS}}^{\text{CS,hopping},i}$ of an SRS port $p_i$ can be determined by:

$$n_{\text{SRS}}^{\text{CS,hopping},i} = \left(n_{\text{SRS}}^{\text{CS},i} + n_{\text{SRS}}^{\text{CS,offset}}\right) \bmod n_{\text{SRS}}^{\text{CS,max}} \quad (14),$$

where $n_{\text{SRS}}^{\text{CS,offset}}$ is a hopping offset belonging to the set of cyclic shift hopping offsets. The hopping offset $n_{\text{SRS}}^{\text{CS,offset}}$ is

determined by at least one of: $N_{\text{SRS}}^{\text{CS,offset}}$, $L_{\text{TC}}$, X, and a random or pseudo-random number $f_{\text{hopping}}$. In some examples, the hopping offset $n_{\text{SRS}}^{\text{CS,offset}}$ can be determined by:

$$n_{\text{SRS}}^{\text{CS,offset}} = N_{\text{SRS}}^{\text{CS,offset}} \left( \left( f_{\text{hopping}} \bmod L_{\text{CS}} \right) + 1 \right) \qquad (15),$$

where $N_{\text{SRS}}^{\text{CS,offset}}(l)$ denotes the lth element of $N_{\text{SRS}}^{\text{CS,offset}}$. In some examples, the hopping offset $n_{\text{SRS}}^{\text{CS,offset}}$ can be determined by:

$$n_{\text{SRS}}^{\text{CS,offset}} = X \cdot f_{\text{hopping}} \qquad (16),$$

where $f_{\text{hopping}}$ is a pseudo-random integer determined by at least one of: the time instant t of the SRS transmission occasion, the pseudo-random sequence $c(i)$, and an integer M. For example, $f_{\text{hopping}}$ can be determined according to expressions (6) and (7).

In some examples, the cyclic shifts $n_{\text{SRS}}^{\text{CS,hopping},i}$ for the SRS port $p_i$ is determined by expression (14). $n_{\text{SRS}}^{\text{CS,offset}}$ is a cyclic shift hopping offset belonging to the set of cyclic shift offsets, $n_{SRS}^{CS,i}$ is the initial cyclic shift of the SRS port $i$, and $n_{\text{SRS}}^{\text{cs,max}}$ is the maximum number of cyclic shifts. In some examples, the cyclic shift hopping offset can be determined by (15). $N_{\text{SRS}}^{\text{CS,offset}}(l)$ denotes the lth element of $N_{\text{SRS}}^{\text{CS,offset}}$, $N_{\text{SRS}}^{\text{CS,offset}}$ is the set of cyclic shift hopping offsets, and $L_{\text{CS}}$ is the number of cyclic shift hopping offsets in the set of cyclic shift hopping offsets. In some examples, the cyclic hopping offset can be determined by (16). X is the cyclic shift hopping granularity. $f_{\text{hopping}}$ is a pseudo-random integer determined by at least one of the transmission time instant t of an SRS transmission occasion, the pseudo-random sequence $c(i)$, and an integer M.

In some examples, the configuration or selection of M by the base station can be determined by at least one of $L_{\text{CS}}$, $\max(L_{\text{CS}})$, $n_{\text{SRS}}^{\text{CS,max}}$, and $\max(n_{\text{SRS}}^{\text{CS,max}})$. That is, in some examples, the integer is determined based on at least one of $L_{\text{CS}}$, the maximum value of $L_{\text{CS}}$, the maximum number of cyclic shifts, or the maximum value of the maximum number of cyclic shifts. In some examples, the integer M can be determined according to:

$$M = \lceil \log_2(L_{\text{CS}}) \rceil + q \qquad (17),$$

where the candidate values of q are {0, 1, 2, 3, 4}. In some examples, the integer M can be determined according to:

$$M = \lceil \log_2(\max(L_{\text{CS}})) \rceil + q \qquad (18),$$

where the candidate values of q are {0, 1, 2, 3, 4}. In some examples, the integer M can be determined according to:

$$M = \lceil \log_2 \left( n_{\text{SRS}}^{\text{CS,max}} \right) \rceil + q \qquad (19),$$

where the candidate values of q are {-4, -3, -2, -1, 0, 1, 2, 3, 4}. In some examples, the integer M can be determined according to:

$$M = \lceil \log_2 \left( \max(n_{\text{SRS}}^{\text{CS,max}}) \right) \rceil + q \qquad (20),$$

where the candidate values of q are {-4, -3, -2, -1, 0, 1, 2, 3, 4}.

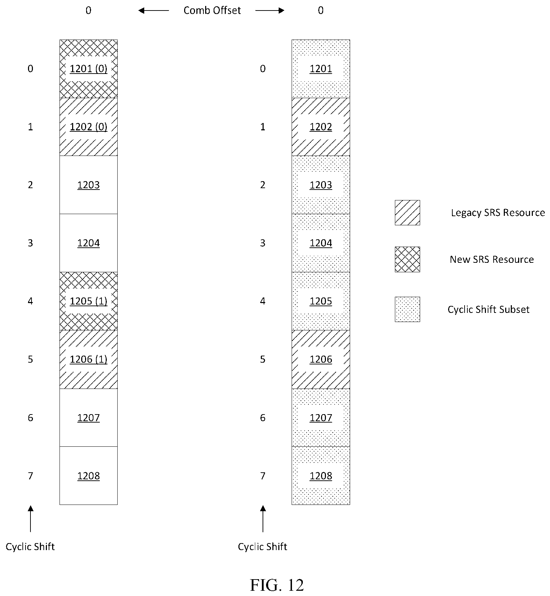

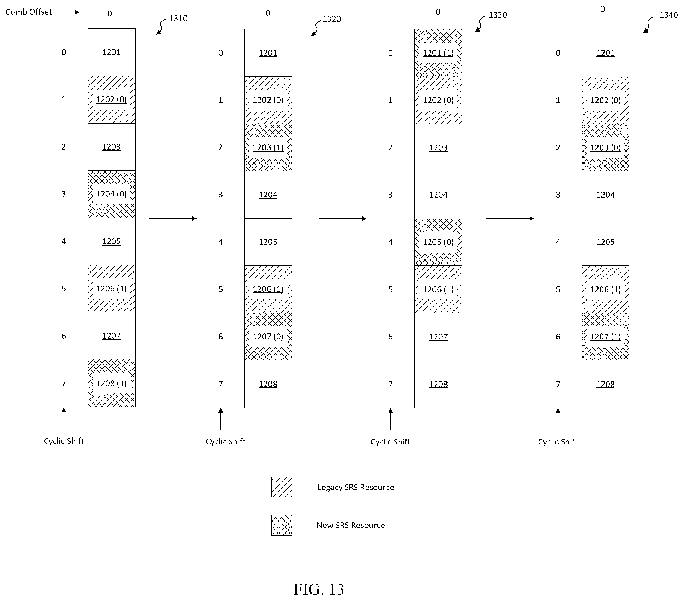

FIG. 12 is a diagram illustrating a configuration of cyclic shift hopping, according to various arrangements. FIG. 13 is a diagram illustrating an implementation of cyclic shift hopping, according to various arrangements. Each of the orthogonal resources 1201, 1202, 1203, 1204, 1205, 1206, 1207, and 1208 is defined by a cyclic shift (e.g., 0, 1, 2, 3, 4, 5, 6, or 7) and a comb offset (e.g., 0).

In FIGS. 12 and 13, the maximum number of cyclic shifts $n_{\mathrm{SRS}}^{\mathrm{CS,max}}$ is 8. When cyclic shift hopping is not enabled, the legacy 2-port SRS resource occupies 2 cyclic shifts (i.e., $n_{\mathrm{SRS}}^{\mathrm{CS},i} = \{1,5\}$ ), a the legacy SRS ports 1000, 1001 occupy orthogonal resources 1202 and 1206, respectively. When cyclic shift hopping is not enabled, the new 2-port SRS resource occupies 2 cyclic shifts, (i.e., $n_{\mathrm{SRS}}^{\mathrm{CS},i} = \{0,4\}$), the new SRS ports 1000 and 1001 occupy orthogonal resources 1201 and 1205, respectively. The index i in the brackets after the orthogonal resource index indicate that this resource is occupied by SRS port $p_i$ = 1000 + $i$

As shown in FIG. 12, configuration of the subset of cyclic shifts includes $N_{\mathrm{SRS}}^{\mathrm{CS,offset}} = \{0,2,3,4,6,7\}$ . When cyclic shift hopping is enabled, the orthogonal resources occupied by the new SRS resource belong to orthogonal resources 1201, 1203, 1204, 1205, 1207, and 1208.

As shown in FIG. 13, to implement the cyclic shift hopping, implementation 1310 can be defined by $n_{\mathrm{SRS}}^{\mathrm{CS,offset}} = 3$ and $n_{\mathrm{SRS}}^{\mathrm{CS},i} = \{3,7\}$ , the new SRS resource occupies orthogonal resources 1204 and 1208. Implementation 1320 can be defined by $n_{\mathrm{SRS}}^{\mathrm{CS,offset}} = 6$ and $n_{\mathrm{SRS}}^{\mathrm{CS},i} = \{6,2\}$ , the new SRS resource occupies orthogonal resources 1203 and 1207. Implementation 1330 can be defined by $n_{\mathrm{SRS}}^{\mathrm{CS,offset}} = 4$ and $n_{\mathrm{SRS}}^{\mathrm{CS},i} = \{4,0\}$ , the new SRS resource occupies orthogonal resources 1201 and 1205. Implementation 1340 can be defined by $n_{\mathrm{SRS}}^{\mathrm{CS,offset}} = 2$ and $n_{\mathrm{SRS}}^{\mathrm{CS},i} = \{2,6\}$ , the new SRS resource occupies orthogonal resources 1203 and 1207. The index i in the brackets after the orthogonal resource index indicate that this resource is occupied by SRS port $p_i$ = 1000+ $i$.

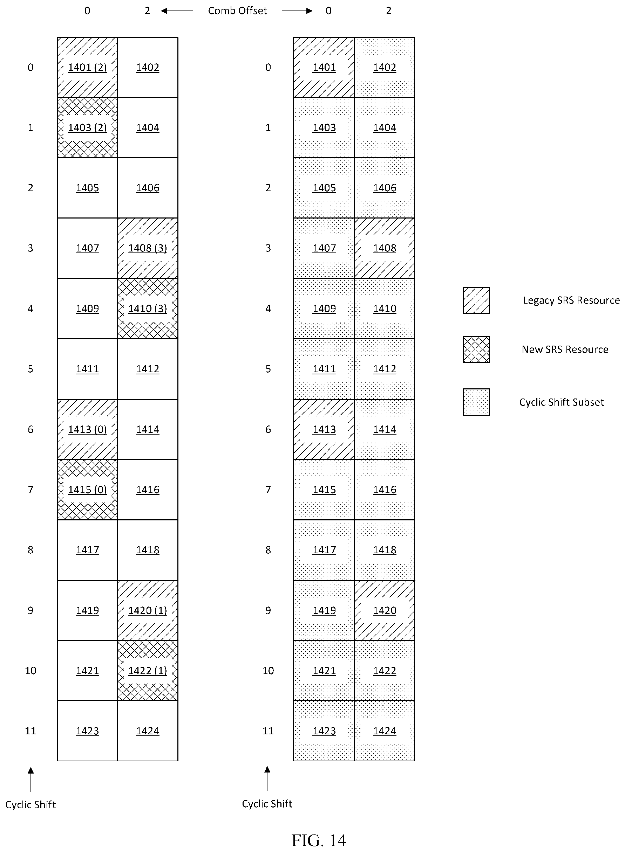

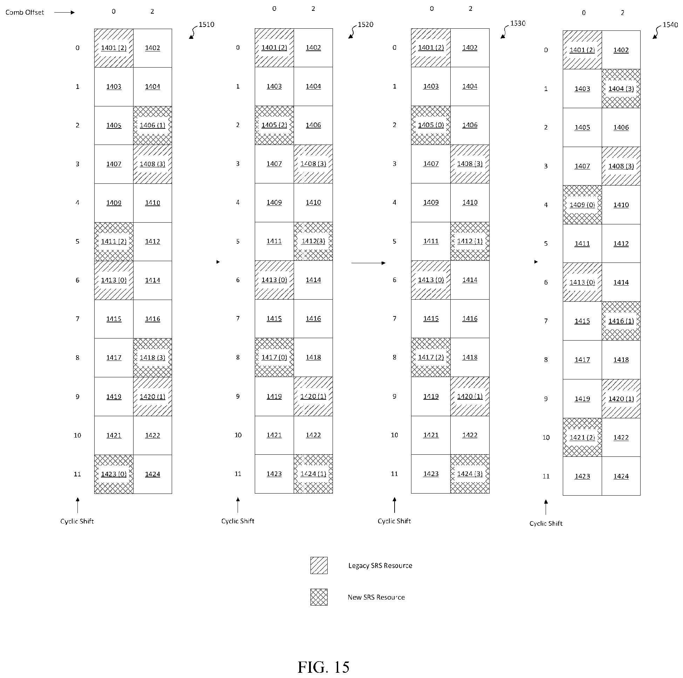

FIG. 14 is a diagram illustrating a configuration of cyclic shift hopping, according to various arrangements. FIG. 15 is a diagram illustrating an implementation of cyclic shift hopping, according to various arrangements. Each of the orthogonal resources 1401, 1402, 1403, 1404, 1405, 1406, 1407, 1408, 1409, 1410, 1411, 1412, 1413, 1414, 1415, 1416, 1417, 1418, 1419, 1420, 1421, 1422, 1423, and 1424 is defined by a cyclic shift (e.g., 0, 1, 2, 3, 4, 5, 6, 7, 8, 9, 10, or 11) and a comb offset (e.g., 0 or 2).

In FIGS. 14 and 15, the maximum number of cyclic shifts $n_{\mathrm{SRS}}^{\mathrm{CS,max}}$ is 12. When cyclic shift hopping is not enabled, the legacy 4-port SRS resource occupies 4 cyclic shifts (i.e., $n_{\mathrm{SRS}}^{\mathrm{CS},i} = \{6,9,0,3\}$ ), the legacy SRS ports 1000, 1001, 1002, 1003 occupy SRS resources 1413, 1420, 1401, 1408, respectively. When cyclic shift hopping is not enabled, the new 4-port SRS resource occupies 4 cyclic shifts, (i.e., $n_{\mathrm{SRS}}^{\mathrm{CS},i} = \{7,10,1,4\}$ ), the new SRS ports 1000, 1001, 1002, 1003 occupy orthogonal resources 1415, 1422, 1403, 1410, respectively. The index i in the brackets after the orthogonal resource index indicate that this resource is occupied by SRS port $p_i$ = 1000 + $i$.

As shown in FIG. 14, configuration of the subset of cyclic shifts includes $N_{\mathrm{SRS}}^{\mathrm{CS,offset}} = \{0,1,2,3,4,5,6,7,8,9,10\}$ . When cyclic shift hopping is enabled, the orthogonal resources occupied by the new SRS resource belong to orthogonal resources 1402, 1403, 1404, 1405, 1406, 1407, 1409, 1410, 1411, 1412, 1414, 1415, 1416, 1417, 1418, 1419, 1421, 1422, 1423, and 1424.

As shown in FIG. 15, to implement the cyclic shift hopping, implementation 1510 can be defined by $n_{\mathrm{SRS}}^{\mathrm{CS,offset}} = 4$ and $n_{\mathrm{SRS}}^{\mathrm{CS},i} = \{11,2,5,8\}$ , the new SRS resource occupies orthogonal resources 1406, 1411, 1418, 1423. Implementation 1520 can be defined by $n_{\mathrm{SRS}}^{\mathrm{CS,offset}} = 1$ and $n_{\mathrm{SRS}}^{\mathrm{CS},i} = \{8,11,0,3\}$ , the new SRS resource occupies orthogonal resources 1405, 1412, 1417, and 1424. Implementation 1530 can be defined by

$$n_{\text{SRS}}^{\text{CS,offset}} = 7$$ and $$n_{\text{SRS}}^{\text{CS},i} = \{2, 5, 8, 11\}$$, the new SRS resource occupies orthogonal resources 1405, 1412, 1417, and 1424. Implementation 1540 can be defined by $$n_{\text{SRS}}^{\text{CS,offset}} = 9$$ and $$n_{\text{SRS}}^{\text{CS},i} = \{4, 10, 1, 7\}$$, the new SRS resource occupies orthogonal resources 1404, 1409, 1416, and 1421. The index i in the brackets after the orthogonal resource index indicate that this resource is occupied by SRS port $p_i$ = 1000 + $i$.

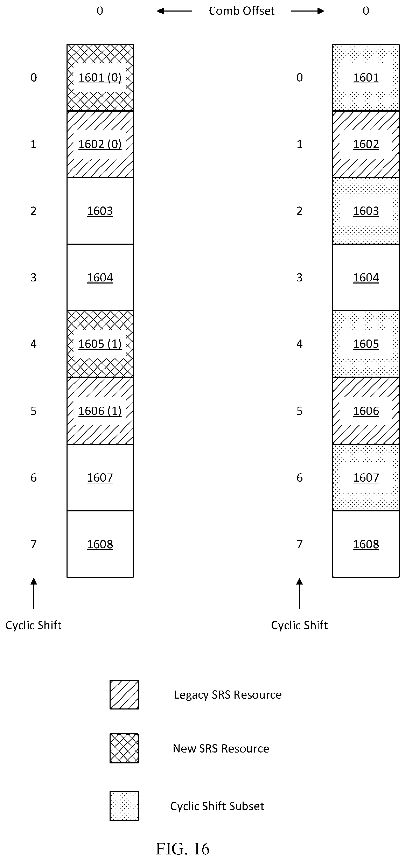

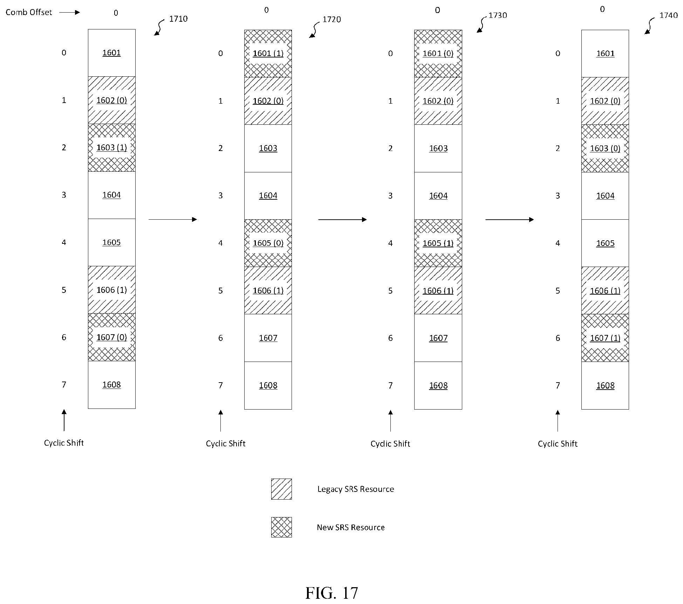

FIG. 16 is a diagram illustrating a configuration of cyclic shift hopping, according to various arrangements. FIG. 17 is a diagram illustrating an implementation of cyclic shift hopping, according to various arrangements. Each of the orthogonal resources 1601, 1602, 1603, 1604, 1605, 1606, 1607, and 1608 is defined by a cyclic shift (e.g., 0, 1, 2, 3, 4, 5, 6, or 7) and a comb offset (e.g., 0).

In FIGS. 16 and 17, the maximum number of cyclic shifts $$n_{\text{SRS}}^{\text{CS,max}}$$ is 8. When cyclic shift hopping is not enabled, the legacy 2-port SRS resource occupies 2 cyclic shifts (i.e., $$n_{\text{SRS}}^{\text{CS},i} = \{1, 5\}$$ ), the legacy SRS ports 1000 and 1001 occupy SRS resources 1602 and 1606, respectively. When cyclic shift hopping is not enabled, the new 2-port SRS resource occupies 2 cyclic shifts, (i.e., $$n_{\text{SRS}}^{\text{CS},i} = \{0, 4\}$$ ), the new SRS ports 1000 and 1001 occupy orthogonal resources 1601 and 1605, respectively. The index i in the brackets after the orthogonal resource index indicate that this resource is occupied by SRS port $p_i$ = 1000 + $i$.

As shown in FIG. 16, configuration of the subset of cyclic shifts includes $X$ = 2. When cyclic shift hopping is enabled, the orthogonal resources occupied by the new SRS resource belong to orthogonal resources 1601, 1603, 1605, and 1607.

As shown in FIG. 17, to implement the cyclic shift hopping, implementation 1710 can be defined by $$n_{\text{SRS}}^{\text{CS,offset}} = 38$$ and $$n_{\text{SRS}}^{\text{CS},i} = \{6, 2\}$$, the new SRS resource occupies orthogonal resources 1603 and 1607.

Implementation 1720 can be defined by $$n_{\text{SRS}}^{\text{CS,offset}} = 20$$ and $$n_{\text{SRS}}^{\text{CS},i} = 4, 0\}$$, the new SRS resource occupies orthogonal SRS resources 1601 and 1605. Implementation 1730 can be defined by $$n_{\text{SRS}}^{\text{CS,offset}} = 48$$ and

$$n_{\text{SRS}}^{\text{CS},i} = \{0, 4\}$$, the new SRS resource occupies orthogonal resources 1601 and 1605. Implementation 1740 can be defined by $$n_{\text{SRS}}^{\text{CS,offset}} = 10$$ and $$n_{\text{SRS}}^{\text{CS},i} = \{2, 6\}$$, the new SRS resource occupies orthogonal resources 1603 and 1607. The index i in the brackets after the orthogonal resource index indicate that this resource is occupied by SRS port $p_i$ = 1000 + $i$.

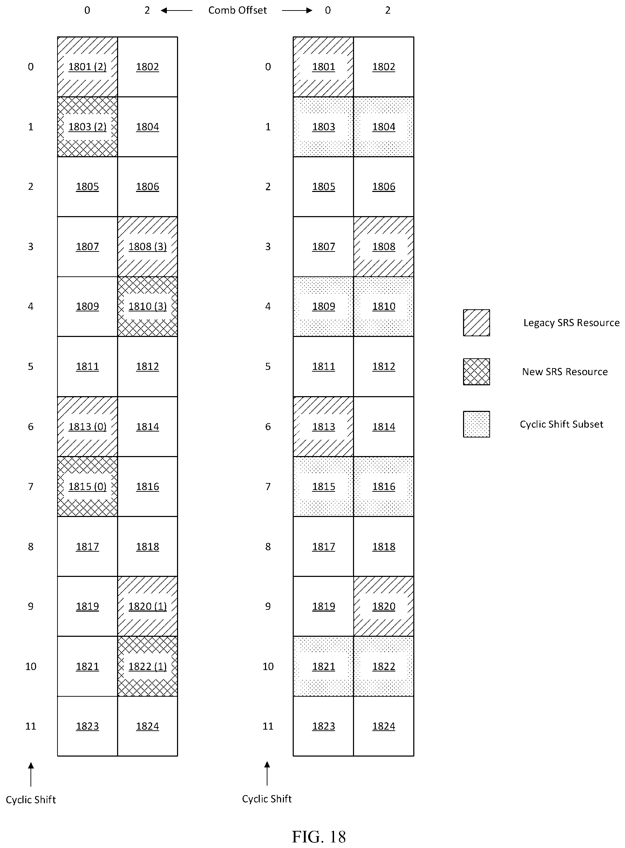

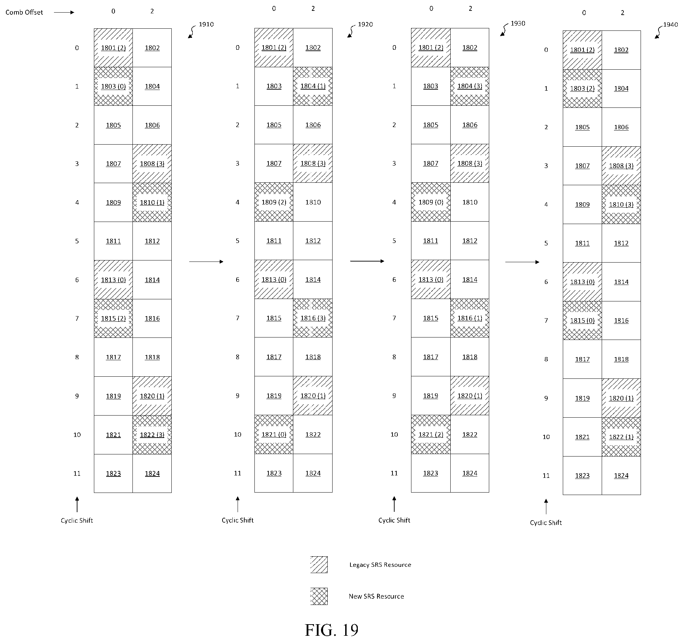

FIG. 18 is a diagram illustrating a configuration of cyclic shift hopping, according to various arrangements. FIG. 19 is a diagram illustrating an implementation of cyclic shift hopping, according to various arrangements. Each of the orthogonal resources 1801, 1802, 1803, 1804, 1805, 1806, 1807, 1808, 1809, 1810, 1811, 1812, 1813, 1814, 1815, 1816, 1817, 1818, 1819, 1820, 1821, 1822, 1823, and 1824 is defined by a cyclic shift (e.g., 0, 1, 2, 3, 4, 5, 6, 7, 8, 9, 10, or 11) and a comb offset (e.g., 0 or 2).

In FIGS. 18 and 19, the maximum number of cyclic shifts $$n_{\text{SRS}}^{\text{CS,max}}$$ is 12. When cyclic shift hopping is not enabled, the legacy 4-port SRS resource occupies 4 cyclic shifts (i.e., $$n_{\text{SRS}}^{\text{CS},i} = \{6, 9, 0, 3\}$$ ), as the legacy SRS ports 1000, 1001, 1002, 1003 occupy resources 1813, 1820, 1801, 1808, respectively. When cyclic shift hopping is not enabled, the new 4-port SRS resource occupies 4 cyclic shifts, (i.e., $$n_{\text{SRS}}^{\text{CS},i} = \{7, 10, 1, 4\}$$ ), the new SRS ports 1000, 1001, 1002, 1003 occupy orthogonal resources 1815, 1822, 1803, 1810, respectively. The index i in the brackets after the orthogonal resource index indicate that this resource is occupied by SRS port $p_i$ = 1000 + $i$.

As shown in FIG. 18, configuration of the subset of cyclic shifts includes $X$ = 3. When cyclic shift hopping is enabled, the orthogonal resources occupied by the new SRS resource belong to orthogonal resources 1803, 1804, 1809, 1810, 1815, 1816, 1821, and 1822.

As shown in FIG. 19, to implement the cyclic shift hopping, implementation 1910 can be defined by

$$n_{\text{SRS}}^{\text{CS,offset}} = 42 \text{ and } n_{\text{SRS}}^{\text{CS},i} = \{1, 4, 7, 10\}$$, the new SRS resource occupies orthogonal resources 1803, 1810, 1815, and 1822. Implementation 1920 can be defined by $n_{\text{SRS}}^{\text{CS,offset}} = 51$ and $n_{\text{SRS}}^{\text{CS},i} = \{10, 1, 4, 7\}$, the new SRS resource occupies orthogonal resources 1804, 1809, 1816, and 1821. Implementation 1930 can be defined by

$$n_{\text{SRS}}^{\text{CS,offset}} = 54 \text{ and } n_{\text{SRS}}^{\text{CS},i} = \{4, 7, 10, 1\}$$, the new SRS resource occupies orthogonal resources 1804, 1809, 1816, and 1821. Implementation 1940 can be defined by $n_{\text{SRS}}^{\text{CS,offset}} = 60$ and $n_{\text{SRS}}^{\text{CS},i} = \{7, 10, 1, 4\}$, the new SRS resource occupies orthogonal resources 1803, 1810, 1815, and 1822. The index i in the brackets after the orthogonal resource index indicate that this resource is occupied by SRS port $p_i = 1000 + i$.

While various arrangements of the present solution have been described above, it should be understood that they have been presented by way of example only, and not by way of limitation. Likewise, the various diagrams may depict an example architectural or configuration, which are provided to enable persons of ordinary skill in the art to understand example features and functions of the present solution. Such persons would understand, however, that the solution is not restricted to the illustrated example architectures or configurations, but can be implemented using a variety of alternative architectures and configurations. Additionally, as would be understood by persons of ordinary skill in the art, one or more features of some arrangements can be combined with one or more features of another arrangement described herein. Thus, the breadth and scope of the present disclosure should not be limited by any of the above-described illustrative arrangements.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A person of ordinary skill in the art would further appreciate that any of the various illustrative logical blocks, modules, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software module), or any combination of these techniques. To clearly illustrate this interchangeability of hardware, firmware and software, various illustrative components, blocks, modules, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure.

Furthermore, a person of ordinary skill in the art would understand that various illustrative logical blocks, modules, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, modules, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein.

If implemented in software, the functions can be stored as one or more instructions or code on a computer-readable medium. Thus, the steps of a method or algorithm disclosed herein can be implemented as software stored on a computer-readable medium. Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

In this document, the term "module" as used herein, refers to software, firmware, hardware, and any combination of these elements for performing the associated functions described herein. Additionally, for purpose of discussion, the various modules are described as discrete modules; however, as would be apparent to one of ordinary skill in the art, two or more modules may be combined to form a single module that performs the associated functions according arrangements of the present solution.

Additionally, memory or other storage, as well as communication components, may be employed in arrangements of the present solution. It will be appreciated that, for clarity purposes, the above description has described arrangements of the present solution with reference to different functional units and processors. However, it will be apparent that any suitable distribution of functionality between different functional units, processing logic elements or domains may be used without detracting from the present solution. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

**Claims**

1. A wireless communication method, comprising:

    receiving (320), by a wireless communication device (150) from a network device (120), a first parameter comprising an indication of a set of comb offset hopping offsets;
    determining (330), by the wireless communication device (150), a comb offset for each Sounding Reference Signal, SRS, port associated with an SRS resource, based on a transmission time instant of a transmission occasion of an SRS, an initial comb offset, and the first parameter; and
    transmitting (340), by the wireless communication device (150) to the network device (120), the SRS according to the comb offset.

2. The wireless communication method of claim 1, wherein the set of comb offset hopping offsets comprises a number of comb offset hopping offsets, the number is less than or equal to a transmission comb.

3. The wireless communication method of claim 1, wherein the set of comb offset hopping offsets is indicated by a bitmap, a length of the bitmap is equal to a transmission comb.

4. The wireless communication method of claim 1, wherein

    the comb offset $k_{\mathrm{TC}}^{\mathrm{hopping}\,,(p_i)}$ for a SRS port $p_i$ is determined by:

$$k_{\mathrm{TC}}^{\mathrm{hopping}\,,(p_i)} = \left( k_{\mathrm{TC}}^{(p_i)} + k_{\mathrm{TC}}^{\mathrm{offset}} \right) \bmod K_{\mathrm{TC}},$$

    wherein $k_{\mathrm{TC}}^{(p_i)}$ is the initial comb offset of the SRS port $p_i$, $K_{\mathrm{TC}}$ is a transmission comb, $k_{\mathrm{TC}}^{\mathrm{offset}}$ is a comb offset hopping offset belonging to the set of comb offset hopping offsets.

5. The wireless communication method of claim 1, further comprising:

    receiving, by the wireless communication device (150) from the network device (120), a second parameter indicating a set of cyclic shifts; and
    determining, by the wireless communication device (150) based on the second parameter, a cyclic shift for each SRS port associated with an SRS resource.

**6.** A wireless communication method, comprising:

sending (310), by a network device (120) to a wireless communication device (150), a first parameter comprising an indication of a set of comb offset hopping offsets, wherein the wireless communication device (150) determines a comb offset for each Sounding Reference Signal, SRS, port associated with an SRS resource based on a transmission time instant of a transmission occasion of an SRS, an initial comb offset, the first parameter; and receiving (350), by the network device (120) from the wireless communication device (150), the SRS according to the comb offset.

**7.** The wireless communication method of claim 6, wherein:

the set of comb offset hopping offsets comprises a number of comb offset hopping offsets, the number is less than or equal to a transmission comb;
the set of comb offset hopping offsets is indicated by a bitmap, a length of the bitmap is equal to a transmission comb; or

the comb offset $k_{\mathrm{TC}}^{\mathrm{hopping}\ ,(p_i)}$ for a SRS port $p_i$ is determined by:

$$k_{\mathrm{TC}}^{\mathrm{hopping}\ ,(p_i)} = \left( k_{\mathrm{TC}}^{(p_i)} + k_{\mathrm{TC}}^{\mathrm{offset}} \right) \bmod K_{\mathrm{TC}},$$

wherein $k_{\mathrm{TC}}^{(p_i)}$ is the initial comb offset of the SRS port $p_i$, $K_{\mathrm{TC}}$ is a transmission comb, $k_{\mathrm{TC}}^{\mathrm{offset}}$ is a comb offset hopping offset belonging to the set of comb offset hopping offsets.

**8.** The wireless communication method of claim 6, further comprising:

sending, from the network device (120) to the wireless communication device (150), a second parameter indicating a set of cyclic shifts,
wherein a cyclic shift for each SRS port associated with an SRS resource is determined based on the second parameter.

**9.** A wireless communication device (150), comprising:
at least one processor configured to:

receive (320), via a transceiver from a network device (120), a first parameter comprising an indication of a set of comb offset hopping offsets;
determine (330) a comb offset for each Sounding Reference Signal, SRS, port associated with an SRS resource, based on a transmission time instant of a transmission occasion of an SRS, an initial comb offset, and the first parameter; and
transmit (340), via the transceiver to the network device (120), the SRS according to the comb offset.

**10.** The wireless communication device (150) of claim 9, wherein:

the set of comb offset hopping offsets comprises a number of comb offset hopping offsets, the number is less than or equal to a transmission comb; or
the set of comb offset hopping offsets is indicated by a bitmap, a length of the bitmap is equal to a transmission comb.

**11.** The wireless communication device (150) of claim 9, wherein the comb offset $k_{\mathrm{TC}}^{\mathrm{hopping}\ ,(p_i)}$ for a SRS port $p_i$ is determined by:

$$k_{\mathrm{TC}}^{\mathrm{hopping}\ ,(p_i)} = \left( k_{\mathrm{TC}}^{(p_i)} + k_{\mathrm{TC}}^{\mathrm{offset}} \right) \bmod K_{\mathrm{TC}},$$

wherein $k_{\mathrm{TC}}^{(p_i)}$ is the initial comb offset of the SRS port $p_i$, $K_{\mathrm{TC}}$ is a transmission comb, $k_{\mathrm{TC}}^{\mathrm{offset}}$ is a comb offset hopping offset belonging to the set of comb offset hopping offsets.

**12.** The wireless communication device (150) of claim 9, wherein the at least one processor is configured to:

receive (310), via the transceiver from the network device (120), a second parameter indicating a set of cyclic shifts; and
determine (350), based on the second parameter, a cyclic shift for each SRS port associated with an SRS resource.

**13.** A network device (120), comprising:
at least one processor configured to:

send, via a transceiver to a wireless communication device (150), a first parameter comprising an indication of a set of comb offset hopping offsets, wherein the wireless communication device (150) determines a comb offset for each Sounding Reference Signal, SRS, port associated with an SRS resource based on a transmission time instant of a transmission occasion of an SRS, an initial comb offset, the first parameter; and
receive, via the transceiver from the wireless communication device (150), the SRS according to the comb offset.

**14.** The network device (120) of claim 13, wherein:

the set of comb offset hopping offsets comprises a number of comb offset hopping offsets, the number is less than or equal to a transmission comb;
the set of comb offset hopping offsets is indicated by a bitmap, a length of the bitmap is equal to a transmission comb; or

the comb offset $k_{\mathrm{TC}}^{\mathrm{hopping}\ ,(p_i)}$ for a SRS port $p_i$ is determined by:

$$k_{\mathrm{TC}}^{\mathrm{hopping}\ ,(p_i)} = \left( k_{\mathrm{TC}}^{(p_i)} + k_{\mathrm{TC}}^{\mathrm{offset}} \right) \bmod K_{\mathrm{TC}},$$

wherein $k_{\mathrm{TC}}^{(p_i)}$ is the initial comb offset of the SRS port $p_i$, $K_{\mathrm{TC}}$ is a transmission comb, $k_{\mathrm{TC}}^{\mathrm{offset}}$ is a comb offset hopping offset belonging to the set of comb offset hopping offsets.

**15.** The network device (120) of claim 14, wherein the at least one processor is configured to:

send, via the transceiver to the wireless communication device (150), a second parameter indicating a set of cyclic shifts,
wherein a cyclic shift for each SRS port associated with an SRS resource is determined based on the second parameter.

**Patentansprüche**

**1.** Drahtloskommunikationsverfahren, umfassend:

Empfangen (320), durch eine Drahtloskommunikationsvorrichtung (150) von einer Netzwerkvorrichtung (120), eines ersten Parameters, der eine Angabe über einen Satz von Kamm-Offset-Sprung-Offsets umfasst;
Bestimmen (330), durch die Drahtloskommunikationsvorrichtung (150), eines Kamm-Offsets für jeden Sondierungsreferenzsignal-Port, SRS-Port, der einer SRS-Ressource zugeordnet ist, basierend auf einem Übertragungszeitpunkt eines Übertragungsereignisses eines SRS, einem anfänglichen Kamm-Offset und dem ersten Parameter; und
Übertragen (340), durch die Drahtloskommunikationsvorrichtung (150) an die Netzwerkvorrichtung (120), des SRS gemäß dem Kamm-Offset.

2. Drahtloskommunikationsverfahren nach Anspruch 1, wobei der Satz von Kamm-Offset-Sprung-Offsets eine Anzahl von Kamm-Offset-Sprung-Offsets umfasst, deren Anzahl kleiner oder gleich einem Übertragungskamm ist.

3. Drahtloskommunikationsverfahren nach Anspruch 1, wobei der Satz von Kamm-Offset-Sprung-Offsets durch eine Bitmap angegeben wird, wobei eine Länge der Bitmap einem Übertragungskamm entspricht.

4. Drahtloskommunikationsverfahren nach Anspruch 1, wobei

der Kamm-Offset $k_{TC}^{Sprung,(p_i)}$ für einen SRS-Port $p_i$ bestimmt wird durch:

$$k_{TC}^{Sprung,(p_i)} = \left( k_{TC}^{(p_i)} + k_{TC}^{Offset} \right) mod\ K_{TC}$$

wobei $k_{TC}^{(p_i)}$ der anfängliche Kamm-Offset des SRS-Ports $p_i$ ist, $K_{TC}$ ein Übertragungskamm ist, $k_{TC}^{Offset}$ ein Kamm-Offset-Sprung-Offset ist, der zum Satz von Kamm-Offset-Sprung-Offsets gehört.

5. Drahtloskommunikationsverfahren nach Anspruch 1, ferner umfassend:

Empfangen, durch die Drahtloskommunikationsvorrichtung (150) von der Netzwerkvorrichtung (120), eines zweiten Parameters, der einen Satz von zyklischen Verschiebungen angibt; und
Bestimmen, durch die Drahtloskommunikationsvorrichtung (150) basierend auf dem zweiten Parameter, einer zyklischen Verschiebung für jeden SRS-Port, der einer SRS-Ressource zugeordnet ist.

6. Drahtloskommunikationsverfahren, umfassend:

Senden (310), durch eine Netzwerkvorrichtung (120) an eine Drahtloskommunikationsvorrichtung (150), eines ersten Parameters, der eine Angabe über einen Satz von Kamm-Offset-Sprung-Offsets umfasst, wobei die Drahtloskommunikationsvorrichtung (150) einen Kamm-Offset für jeden Sondierungsreferenzsignal-Port, SRS-Port, der einer SRS-Ressource zugeordnet ist, basierend auf einem Übertragungszeitpunkt eines Übertragungsereignisses eines SRS, einem anfänglichen Kamm-Offset, dem ersten Parameter bestimmt; und
Empfangen (350), durch die Netzwerkvorrichtung (120) von der Drahtloskommunikationsvorrichtung (150), des SRS gemäß dem Kamm-Offset.

7. Drahtloskommunikationsverfahren nach Anspruch 6, wobei:

der Satz von Kamm-Offset-Sprung-Offsets eine Anzahl von Kamm-Offset-Sprung-Offsets umfasst, deren Anzahl kleiner oder gleich einem Übertragungskamm ist;
der Satz von Kamm-Offset-Sprung-Offsets durch eine Bitmap angegeben wird, wobei eine Länge der Bitmap einem Übertragungskamm entspricht; oder

der Kamm-Offset $k_{TC}^{Sprung,(p_i)}$ für einen SRS-Port $p_i$ bestimmt wird durch:

$$k_{TC}^{Sprung,(p_i)} = \left( k_{TC}^{(p_i)} + k_{TC}^{Offset} \right) mod\ K_{TC}$$

wobei $k_{TC}^{(p_i)}$ der anfängliche Kamm-Offset des SRS-Ports $p_i$ ist, $K_{TC}$ ein Übertragungskamm ist, $k_{TC}^{Offset}$ ein Kamm-Offset-Sprung-Offset ist, der zum Satz von Kamm-Offset-Sprung-Offsets gehört.

8. Drahtloskommunikationsverfahren nach Anspruch 6, ferner umfassend:

Senden, von der Netzwerkvorrichtung (120) an die Drahtloskommunikationsvorrichtung (150), eines zweiten Parameters, der einen Satz von zyklischen Verschiebungen angibt,
wobei eine zyklische Verschiebung für jeden SRS-Port, der einer SRS-Ressource zugeordnet ist, basierend auf dem zweiten Parameter bestimmt wird.

**9.** Drahtloskommunikationsvorrichtung (150), umfassend:
mindestens einen Prozessor, der konfiguriert ist zum:

Empfangen (320), über einen Transceiver von einer Netzwerkvorrichtung (120), eines ersten Parameters, der eine Angabe über einen Satz von Kamm-Offset-Sprung-Offsets umfasst;
Bestimmen (330) eines Kamm-Offsets für jeden Sondierungsreferenzsignal-, SRS-, Port der einer SRS-Ressource zugeordnet ist, basierend auf einem Übertragungszeitpunkt eines Übertragungsereignisses eines SRS, einem anfänglichen Kamm-Offset und dem ersten Parameter; und
Übertragen (340), über den Transceiver an die Netzwerkvorrichtung (120), des SRS gemäß dem Kamm-Offset.

**10.** Drahtloskommunikationsvorrichtung (150) nach Anspruch 9, wobei:

der Satz von Kamm-Offset-Sprung-Offsets eine Anzahl von Kamm-Offset-Sprung-Offsets umfasst, deren Anzahl kleiner oder gleich einem Übertragungskamm ist; oder
der Satz von Kamm-Offset-Sprung-Offsets durch eine Bitmap angegeben wird, wobei eine Länge der Bitmap einem Übertragungskamm entspricht.

**11.** Drahtloskommunikationsvorrichtung (150) nach Anspruch 9, wobei der Kamm-Offset $k_{TC}^{Sprung\,,(p_i)}$ für einen SRS-Port $p_i$ bestimmt wird durch:

$$k_{TC}^{Sprung\,,(p_i)} = \left( k_{TC}^{(p_i)} + k_{TC}^{Offset} \right) mod\, K_{TC}$$

wobei $k_{TC}^{(p_i)}$ der anfängliche Kamm-Offset des SRS-Ports $p_i$ ist, $K_{TC}$ ein Übertragungskamm ist, $k_{TC}^{Offset}$ ein Kamm-Offset-Sprung-Offset ist, der zum Satz von Kamm-Offset-Sprung-Offsets gehört.

**12.** Drahtloskommunikationsvorrichtung (150) nach Anspruch 9, wobei der mindestens eine Prozessor konfiguriert ist zum:

Empfangen (310), über den Transceiver von der Netzwerkvorrichtung (120), eines zweiten Parameters, der einen Satz von zyklischen Verschiebungen angibt; und
Bestimmen (350), basierend auf dem zweiten Parameter, einer zyklischen Verschiebung für jeden SRS-Port, der einer SRS-Ressource zugeordnet ist.

**13.** Netzwerkvorrichtung (120), umfassend:
mindestens einen Prozessor, der konfiguriert ist zum:

Senden, über einen Transceiver an eine Drahtloskommunikationsvorrichtung (150), eines ersten Parameters, der eine Angabe über einen Satz von Kamm-Offset-Sprung-Offsets umfasst, wobei die Drahtloskommunikationsvorrichtung (150) einen Kamm-Offset für jeden Sondierungsreferenzsignal-Port, SRS-Port, der einer SRS-Ressource zugeordnet ist, basierend auf einem Übertragungszeitpunkt eines Übertragungsereignisses eines SRS, einem anfänglichen Kamm-Offset, dem ersten Parameter ermittelt; und
Empfangen, über den Transceiver von der Drahtloskommunikationsvorrichtung (150), des SRS gemäß dem Kamm-Offset.

**14.** Netzwerkvorrichtung (120) nach Anspruch 13, wobei:

der Satz von Kamm-Offset-Sprung-Offsets eine Anzahl von Kamm-Offset-Sprung-Offsets umfasst, deren Anzahl kleiner oder gleich einem Übertragungskamm ist;
der Satz von Kamm-Offset-Sprung-Offsets durch eine Bitmap angegeben wird, wobei eine Länge der Bitmap einem Übertragungskamm entspricht; oder
der Kamm-Offset $k_{TC}^{Sprung\,,(p_i)}$ für einen SRS-Port $p_i$ ermittelt wird durch:

$$k_{TC}^{Sprung\,,(p_i)} = \left( k_{TC}^{(p_i)} + k_{TC}^{Offset} \right) mod\ K_{TC}$$

wobei $k_{TC}^{(p_i)}$ der anfängliche Kamm-Offset des SRS-Ports $p_i$ ist, $K_{TC}$ ein Übertragungskamm ist, $k_{TC}^{Offset}$ ein Kamm-Offset-Sprung-Offset ist, der zum Satz von Kamm-Offset-Sprung-Offsets gehört.

**15.** Netzwerkvorrichtung (120) nach Anspruch 14, wobei der mindestens eine Prozessor konfiguriert ist zum:

Senden, über den Transceiver an die Drahtloskommunikationsvorrichtung (150), eines zweiten Parameters, der einen Satz von zyklischen Verschiebungen angibt,
wobei eine zyklische Verschiebung für jeden SRS-Port, der einer SRS-Ressource zugeordnet ist, basierend auf dem zweiten Parameter bestimmt wird.

**Revendications**

**1.** Procédé de communication sans fil, comprenant :

la réception (320), par un dispositif de communication sans fil (150) d'un dispositif réseau (120), d'un premier paramètre comprenant une indication d'un ensemble de décalages de saut de décalage de peigne ;
la détermination (330), par le dispositif de communication sans fil (150), d'un décalage de peigne pour chaque port de signal de référence sonore, SRS, associé à une ressource SRS sur la base d'un instant de transmission d'une occasion de transmission d'un SRS, d'un décalage de peigne initial et du premier paramètre ; et
la transmission (340), par le dispositif de communication sans fil (150), au dispositif réseau (120) du SRS en fonction du décalage de peigne.

**2.** Procédé de communication sans fil selon la revendication 1, dans lequel l'ensemble de décalages de saut de décalage de peigne comprend un certain nombre de décalages de saut de décalage de peigne, le nombre étant inférieur ou égal à un peigne de transmission.

**3.** Procédé de communication sans fil selon la revendication 1, dans lequel l'ensemble de décalages de saut de décalage de peigne est indiqué par une table de bits, une longueur de la table de bits étant égale à un peigne de transmission.

**4.** Procédé de communication sans fil selon la revendication 1, dans lequel

le décalage de peigne $k_{\mathrm{TC}}^{\mathrm{saut}\,,(p_i)}$ pour un port SRS $p_i$ est déterminé par :

$$k_{\mathrm{TC}}^{\mathrm{saut}\,,(p_i)} = \left( k_{\mathrm{TC}}^{(p_i)} + k_{\mathrm{TC}}^{\mathrm{décalage}} \right) \bmod K_{\mathrm{TC}},$$

où $k_{\mathrm{TC}}^{(p_i)}$ est le décalage de peigne initial du port SRS $p_i$, $K_{\mathrm{TC}}$ est un peigne de transmission, $k_{\mathrm{TC}}^{\mathrm{décalage}}$ est un décalage de saut de décalage de peigne appartenant à l'ensemble de décalages de saut de décalage de peigne.

**5.** Procédé de communication sans fil selon la revendication 1, comprenant en outre :

la réception, par le dispositif de communication sans fil (150) du dispositif réseau (120), d'un second paramètre indiquant un ensemble de décalages circulaires ; et
la détermination, par le dispositif de communication sans fil (150), sur la base du second paramètre, d'un décalage circulaire pour chaque port SRS associé à une ressource SRS.

**6.** Procédé de communication sans fil, comprenant :

l'envoi (310), par un dispositif réseau (120), à un dispositif de communication sans fil (150) d'un premier paramètre comprenant une indication d'un ensemble de décalages de saut de décalage de peigne, dans lequel le dispositif de communication sans fil (150) détermine un décalage de peigne pour chaque port de signal de référence sonore, SRS, associé à une ressource SRS sur la base d'un instant de transmission d'une occasion de transmission d'un SRS, d'un décalage de peigne initial, du premier paramètre ; et

la réception (350), par le dispositif réseau (120) du dispositif de communication sans fil (150), du SRS en fonction du décalage de peigne.

7. Procédé de communication sans fil selon la revendication 6, dans lequel :

l'ensemble de décalages de saut de décalage de peigne comprend un certain nombre de décalages de saut de décalage de peigne, le nombre étant inférieur ou égal à un peigne de transmission ;

l'ensemble de décalages de saut de décalage de peigne est indiqué par une table de bits, une longueur de la table de bits étant égale à un peigne de transmission ; ou

le décalage de peigne $k_{\mathrm{TC}}^{\mathrm{saut},(p_i)}$ pour un port SRS $p_i$ est déterminé par :

$$k_{\mathrm{TC}}^{\mathrm{saut},(p_i)} = \left( k_{\mathrm{TC}}^{(p_i)} + k_{\mathrm{TC}}^{\mathrm{décalage}} \right) \bmod K_{\mathrm{TC}},$$

où $k_{\mathrm{TC}}^{(p_i)}$ est le décalage de peigne initial du port SRS $p_i$, $K_{TC}$ est un peigne de transmission, $k_{\mathrm{TC}}^{\mathrm{décalage}}$ est un décalage de saut de décalage de peigne appartenant à l'ensemble de décalages de saut de décalage de peigne.

8. Procédé de communication sans fil selon la revendication 6, comprenant en outre :

l'envoi, du dispositif réseau (120) au dispositif de communication sans fil (150), d'un second paramètre indiquant un ensemble de décalages circulaires,

dans lequel un décalage circulaire pour chaque port SRS associé à une ressource SRS est déterminé sur la base du second paramètre.

9. Dispositif de communication sans fil (150), comprenant :
au moins un processeur configuré pour :

recevoir (320), par l'intermédiaire d'un émetteur-récepteur d'un dispositif réseau (120), un premier paramètre comprenant une indication d'un ensemble de décalages de saut de décalage de peigne ;

déterminer (330) un décalage de peigne pour chaque port de signal de référence sonore, SRS, associé à une ressource SRS sur la base d'un instant de transmission d'une occasion de transmission d'un SRS, d'un décalage de peigne initial et du premier paramètre ; et

transmettre (340), par l'intermédiaire de l'émetteur-récepteur, au dispositif réseau (120) le SRS en fonction du décalage de peigne.

10. Dispositif de communication sans fil (150) selon la revendication 9, dans lequel :

l'ensemble de décalages de saut de décalage de peigne comprend un certain nombre de décalages de saut de décalage de peigne, le nombre étant inférieur ou égal à un peigne de transmission ; ou

l'ensemble de décalages de saut de décalage de peigne est indiqué par une table de bits, une longueur de la table de bits étant égale à un peigne de transmission.

11. Dispositif de communication sans fil (150) selon la revendication 9, dans lequel le décalage de peigne $k_{\mathrm{TC}}^{\mathrm{saut},(p_i)}$ pour un port SRS $p_i$ est déterminé par :

$$k_{\mathrm{TC}}^{\mathrm{saut},(p_i)} = \left( k_{\mathrm{TC}}^{(p_i)} + k_{\mathrm{TC}}^{\mathrm{décalage}} \right) \bmod K_{\mathrm{TC}},$$

où $k_{\mathrm{TC}}^{(p_i)}$ est le décalage de peigne initial du port SRS $p_i$, $K_{TC}$ est un peigne de transmission, $k_{\mathrm{TC}}^{\mathrm{décalage}}$ est un décalage de saut de décalage de peigne appartenant à l'ensemble de décalages de saut de décalage de peigne.

12. Dispositif de communication sans fil (150) selon la revendication 9, dans lequel l'au moins un processeur est configuré pour :

recevoir (310), par l'intermédiaire de l'émetteur-récepteur du dispositif réseau (120), un second paramètre indiquant un ensemble de décalages circulaires ; et
déterminer (350), sur la base du second paramètre, un décalage circulaire pour chaque port SRS associé à une ressource SRS.

13. Dispositif réseau (120), comprenant :
au moins un processeur configuré pour :

envoyer, par l'intermédiaire d'un émetteur-récepteur, à un dispositif de communication sans fil (150) un premier paramètre comprenant une indication d'un ensemble de décalages de saut de décalage de peigne, dans lequel le dispositif de communication sans fil (150) détermine un décalage de peigne pour chaque port de signal de référence sonore, SRS, associé à une ressource SRS sur la base d'un instant de transmission d'une occasion de transmission d'un SRS, d'un décalage de peigne initial, du premier paramètre ; et
recevoir, par l'intermédiaire de l'émetteur-récepteur du dispositif de communication sans fil (150), le SRS en fonction du décalage de peigne.

14. Dispositif réseau (120) selon la revendication 13, dans lequel :

l'ensemble de décalages de saut de décalage de peigne comprend un certain nombre de décalages de saut de décalage de peigne, le nombre étant inférieur ou égal à un peigne de transmission ;
l'ensemble de décalages de saut de décalage de peigne est indiqué par une table de bits, une longueur de la table de bits étant égale à un peigne de transmission ; ou

le décalage de peigne $k_{\mathrm{TC}}^{\mathrm{saut},(p_i)}$ pour un port SRS $p_i$ est déterminé par :

$$k_{\mathrm{TC}}^{\mathrm{saut},(p_i)} = \left( k_{\mathrm{TC}}^{(p_i)} + k_{\mathrm{TC}}^{\mathrm{décalage}} \right) \bmod K_{\mathrm{TC}},$$

où $k_{\mathrm{TC}}^{(p_i)}$ est le décalage de peigne initial du port SRS $p_i$, $K_{TC}$ est un peigne de transmission, $k_{\mathrm{TC}}^{\mathrm{décalage}}$ est un décalage de saut de décalage de peigne appartenant à l'ensemble de décalages de saut de décalage de peigne.

15. Dispositif réseau (120) selon la revendication 14, dans lequel l'au moins un processeur est configuré pour :

envoyer, par l'intermédiaire de l'émetteur-récepteur, au dispositif de communication sans fil (150) un second paramètre indiquant un ensemble de décalages circulaires,
dans lequel un décalage circulaire pour chaque port SRS associé à une ressource SRS est déterminé sur la base du second paramètre.

FIG. 1

FIG. 2

FIG. 3

FIG. 4

Cyclic Shift ⟶ 0    6    ⟲ 510    0    6    ⟲ 520    0    6    ⟲ 530

| | 0 | 6 | | | 0 | 6 | | | 0 | 6 |
|---|---|---|---|---|---|---|---|---|---|---|
| 0 | 401 | 402 | | 0 | 401 (0) | 402 (1) | | 0 | 401 | 402 |
| 1 | 403 (0) | 404 (1) | | 1 | 403 (0) | 404 (1) | | 1 | 403 (0) | 404 (1) |
| 2 | 405 (0) | 406 (1) | | 2 | 405 | 406 | | 2 | 405 | 406 |
| 3 | 407 | 408 | | 3 | 407 | 408 | | 3 | 407 (0) | 408 (1) |

↑ Comb Offset          ↑ Comb Offset          ↑ Comb Offset

Legacy SRS Resource

New SRS Resource

FIG. 5

0            6  ←——  Cyclic Shift  ——→  0            6

| | 0 | 6 |
|---|---|---|
| 0 | 601 (0) | 602 (2) |
| 1 | 603 (0) | 604 (2) |
| 2 | 605 | 606 |
| 3 | 607 | 608 |
| 4 | 609 (1) | 610 (3) |
| 5 | 611 (1) | 612 (3) |
| 6 | 613 | 614 |
| 7 | 615 | 616 |

| | 0 | 6 |
|---|---|---|
| 0 | 601 | 602 |
| 1 | 603 | 604 |
| 2 | 605 | 606 |
| 3 | 607 | 608 |
| 4 | 609 | 610 |
| 5 | 611 | 612 |
| 6 | 613 | 614 |
| 7 | 615 | 616 |

Comb Offset               Comb Offset

Legacy SRS Resource

New SRS Resource

Comb Offset Subset

FIG. 6

FIG. 7

FIG. 8

Cyclic Shift ⟶

0    6              0    6              0    6

910                920                930

| | 0 | 6 |
|---|---|---|
| 0 | 801 | 802 |
| 1 | 803 (0) | 804 (1) |
| 2 | 805 (0) | 806 (1) |
| 3 | 807 | 808 |

| | 0 | 6 |
|---|---|---|
| 0 | 801 (0) | 802 (1) |
| 1 | 803 (0) | 804 (1) |
| 2 | 805 | 806 |
| 3 | 807 | 808 |

| | 0 | 6 |
|---|---|---|
| 0 | 801 | 802 |
| 1 | 803 (0) | 804 (1) |
| 2 | 805 (0) | 806 (1) |
| 3 | 807 | 808 |

Comb Offset          Comb Offset          Comb Offset

Legacy SRS Resource

New SRS Resource

FIG. 9

FIG. 10

FIG. 11

FIG. 12

FIG. 13

FIG. 14

Comb Offset

| | 0 | 2 |
|---|---|---|
| 0 | 1401 (2) | 1402 |
| 1 | 1403 | 1404 |
| 2 | 1405 | 1406 (1) |
| 3 | 1407 | 1408 (3) |
| 4 | 1409 | 1410 |
| 5 | 1411 (2) | 1412 |
| 6 | 1413 (0) | 1414 |
| 7 | 1415 | 1416 |
| 8 | 1417 | 1418 (3) |
| 9 | 1419 | 1420 (1) |
| 10 | 1421 | 1422 |
| 11 | 1423 (0) | 1424 |

1510

Cyclic Shift

| | 0 | 2 |
|---|---|---|
| 0 | 1401 (2) | 1402 |
| 1 | 1403 | 1404 |
| 2 | 1405 (2) | 1406 |
| 3 | 1407 | 1408 (3) |
| 4 | 1409 | 1410 |
| 5 | 1411 | 1412(3) |
| 6 | 1413 (0) | 1414 |
| 7 | 1415 | 1416 |
| 8 | 1417 (0) | 1418 |
| 9 | 1419 | 1420 (1) |
| 10 | 1421 | 1422 |
| 11 | 1423 | 1424 (1) |

1520

Cyclic Shift

| | 0 | 2 |
|---|---|---|
| 0 | 1401 (2) | 1402 |
| 1 | 1403 | 1404 |
| 2 | 1405 (0) | 1406 |
| 3 | 1407 | 1408 (3) |
| 4 | 1409 | 1410 |
| 5 | 1411 | 1412 (1) |
| 6 | 1413 (0) | 1414 |
| 7 | 1415 | 1416 |
| 8 | 1417 (2) | 1418 |
| 9 | 1419 | 1420 (1) |
| 10 | 1421 | 1422 |
| 11 | 1423 | 1424 (3) |

1530

Cyclic Shift

| | 0 | 2 |
|---|---|---|
| 0 | 1401 (2) | 1402 |
| 1 | 1403 | 1404 (3) |
| 2 | 1405 | 1406 |
| 3 | 1407 | 1408 (3) |
| 4 | 1409 (0) | 1410 |
| 5 | 1411 | 1412 |
| 6 | 1413 (0) | 1414 |
| 7 | 1415 | 1416 (1) |
| 8 | 1417 | 1418 |
| 9 | 1419 | 1420 (1) |
| 10 | 1421 (2) | 1422 |
| 11 | 1423 | 1424 |

1540

Cyclic Shift

◫ Legacy SRS Resource

◫ New SRS Resource

FIG. 15

FIG. 16

FIG. 17

FIG. 18

Comb Offset ⟶

| 0 | 2 |
|---|---|

1910

| 0 | 1801 (2) | 1802 |
| 1 | 1803 (0) | 1804 |
| 2 | 1805 | 1806 |
| 3 | 1807 | 1808 (3) |
| 4 | 1809 | 1810 (1) |
| 5 | 1811 | 1812 |
| 6 | 1813 (0) | 1814 |
| 7 | 1815 (2) | 1816 |
| 8 | 1817 | 1818 |
| 9 | 1819 | 1820 (1) |
| 10 | 1821 | 1822 (3) |
| 11 | 1823 | 1824 |

Cyclic Shift

1920

| 0 | 1801 (2) | 1802 |
| 1 | 1803 | 1804 (1) |
| 2 | 1805 | 1806 |
| 3 | 1807 | 1808 (3) |
| 4 | 1809 (2) | 1810 |
| 5 | 1811 | 1812 |
| 6 | 1813 (0) | 1814 |
| 7 | 1815 | 1816 (3) |
| 8 | 1817 | 1818 |
| 9 | 1819 | 1820 (1) |
| 10 | 1821 (0) | 1822 |
| 11 | 1823 | 1824 |

Cyclic Shift

1930

| 0 | 1801 (2) | 1802 |
| 1 | 1803 | 1804 (3) |
| 2 | 1805 | 1806 |
| 3 | 1807 | 1808 (3) |
| 4 | 1809 (0) | 1810 |
| 5 | 1811 | 1812 |
| 6 | 1813 (0) | 1814 |
| 7 | 1815 | 1816 (1) |
| 8 | 1817 | 1818 |
| 9 | 1819 | 1820 (1) |
| 10 | 1821 (2) | 1822 |
| 11 | 1823 | 1824 |

Cyclic Shift

1940

| 0 | 1801 (2) | 1802 |
| 1 | 1803 (2) | 1804 |
| 2 | 1805 | 1806 |
| 3 | 1807 | 1808 (3) |
| 4 | 1809 | 1810 (3) |
| 5 | 1811 | 1812 |
| 6 | 1813 (0) | 1814 |
| 7 | 1815 (0) | 1816 |
| 8 | 1817 | 1818 |
| 9 | 1819 | 1820 (1) |
| 10 | 1821 | 1822 (1) |
| 11 | 1823 | 1824 |

Cyclic Shift

Legacy SRS Resource

New SRS Resource

FIG. 19

**EP 4 410 021 B1**

**Non-patent literature cited in the description**

- **MIN ZHU et al.** On SRS enhancement for CJT and 8Tx operation. *3GPP Draft R1-2304709*